# EUROPÄISCHE PATENTSCHRIFT

(11) **EP 2 036 368 B1**
(45) Veröffentlichungstag und Bekanntmachung des Hinweises auf die Patenterteilung: **11.07.2018**
(21) Anmeldenummer: 07729336.3
(22) Anmeldetag: 21.05.2007
(51) Int. Cl.: H04W 72/00, H04W 84/18

(54) **VERFAHREN, NETZWERKKNOTEN UND SYSTEM ZUR BROADCAST-ÜBERTRAGUNG VON DATEN**
METHOD, NETWORK NODES, AND SYSTEM FOR BROADCAST TRANSMISSION OF DATA
PROCÉDÉ, NOEUDS DE RÉSEAU ET SYSTÈME DE TRANSMISSION DE DONNÉES PAR RADIODIFFUSION

(30) Priorität: 30.06.2006 DE 102006030297
(43) Veröffentlichungstag der Anmeldung: 18.03.2009
(73) Patentinhaber: Unify GmbH & Co. KG, 80807 München (DE)
(72) Erfinder: MOGRE, Parag Sudhir, 64289 Darmstadt (DE); ZILLER, Andreas, 81827 München (DE); HOLLICK, Matthias, 64289 Darmstadt (DE); SCHWINGENSCHLÖGL, Christian, 85640 Putzbrunn (DE)
(74) Vertreter: Fritzsche, Thomas
(86) Internationale Anmeldenummer: PCT/EP2007/054892
(87) Internationale Veröffentlichungsnummer: WO 2008/000554

(56) Entgegenhaltungen:
- EP-A- 1 351 437
- EP-A- 1 594 268
- WO-A-02/21769
- PEDRO FRANCISCO ROBLES RICO: "Investigation of IEEE standard 802.16 Medium Access Control (MAC) layer in Distributed Mesh Networks and comparison with IEEE 802.11 ad-hoc networks" THESIS, XX, XX, [Online] Bd. LiTH-ISY-EX-6/3891, Mai 2006 (2006-05), Seiten 1-73, XP007903314 Linköping Gefunden im Internet: URL:http://www.diva-portal.org/diva/getDoc ument?urn_nbn_se_liu_diva-6908-1__fulltext .pdf> [gefunden am 2007-10-29]

## Beschreibung

Die Erfindung betrifft ein Verfahren und einen Netzwerkknoten zur Broadcast-Übertragung von Daten mit garantierter Datenzustellung in einem Netz, insbesondere in einem Mesh-Datennetz.

Der IEEE 802.16-Standard spezifiziert die Luftschnittstelle einschließlich der Medium Access Control (MAC) und verschiedener Spezifikationen der physikalischen Schicht eines Breitband-drahtlosen Zugriffsystems (BWA: Broadband Wireless Access) zur Unterstützung verschiedener Dienstleistungen. Der IEEE 802.16-Standard spezifiziert zwei Betriebsmodi, nämlich einen Multipunkt-Betriebsmodus (PMP: Point-to-Multipoint-Mode) und einen optionalen Mesh-Betriebsmodus.

In dem PMP-Betriebsmodus ist es ausschließlich möglich, dass Teilnehmerstationen bzw. Subscriberstationen nur mit einer Basisstation kommunizieren können. Die einzelnen Teilnehmerstationen, bei denen es beispielsweise um mobile Endgeräte handelt, können nicht direkt miteinander kommunizieren. Daher müssen sich die einzelnen Teilnehmerstationen innerhalb der direkten Sendereichweite der Basisstation befinden, um einen Zugang zu dem Netzwerk zu erhalten.

Der andere in dem Standard 802.16 spezifizierte Betriebsmodus wird als Mesh-Betriebsmodus MSH (Mesh Mode) bezeichnet. Der Hauptunterschied zwischen dem PMP-Betriebsmodus und dem MSH-Betriebsmodus besteht darin, dass in dem PMP-Betriebsmodus der Datenaustausch ausschließlich zwischen der Basisstation und den Teilnehmerstationen stattfindet und keine Daten direkt zwischen Teilnehmerstationen übertragen werden können. Im Mesh-Betriebsmodus können Daten direkt zwischen einer Teilnehmerstation und der Basisstation ausgetauscht werden indem die Daten über andere Teilnehmerstationen geroutet werden. Ein Datenaustausch kann auch direkt zwischen unterschiedlichen Teilnehmerstationen erfolgen. Der Vorteil eines Mesh-Betriebsmodus besteht darin, dass er eine indirekte Datenkommunikation eines Teilnehmergerätes mit der Basisstation erlaubt, d. h. es müssen weniger Basisstationen bei der Implementierung des Netzes vorgesehen werden. Ein weiterer Vorteil besteht in einer erhöhten Reichweite der Basisstation, die über der physikalischen Sendereichweite des eigenen Netzwerkadapters hinausgeht.

Die auf dem Standard 802.16-2004 basierenden Mesh-Datennetze beschreiben keinen Mechanismus für einen Broadcast- oder einen Multicast von Daten. Bei einer Broadcast-Datenübertragung von Daten sendet ein Sendeknoten Daten an alle (Broadcast) oder an eine bestimmte Untergruppe von benachbarten Knoten (Multicast). Damit ein Senderknoten an die benachbarten Knoten Daten senden kann, muss er gemäß dem 802.16-2004-Standard seine Broadcast-Nachrichten sequentiell senden, d. h. der Sendeknoten sendet die Daten als Unicast zunächst an einen ersten Empfangsknoten und dann anschließend an einen weiteren Empfangsknoten usw. bis alle benachbarten Knoten erreicht sind. Die dabei benötigte Bandbreite steigt mit der Anzahl der benachbarten Knoten. Die zeitliche Verzögerung der übermittelten Broadcast-Nachrichten wird ebenfalls erhöht. Die zeitliche Verzögerung bzw. das Delay für darauf folgende Nachrichten steigt ebenfalls durch den Aufwand für die Übermittlung der Broadcast-Nachricht.

Die verteilte Reservierung (Distributed Scheduling), wie sie in einem Mesh-Betriebsmodus verwendet wird, erlaubt den Knoten, ihre Datenübertragungen in verteilter Weise in ihrer Zwei-Hop-Nachbarschaft zu koordinieren, d. h. mit Knoten, die nicht weiter als zwei Übertragungsverbindungen bzw. Links von dem Knoten entfernt sind. Hierdurch ist es möglich, einen freien Datentransfer ohne Kollision bzw. Engpässe zu realisieren. Der in dem Standard IEEE 802.16 definierte Mesh-Betriebsmodus unterstützt allerdings lediglich die Anforderung und Gewährung einer Bandbreite für eine Unicast-Datenübertragung, d. h. eine Datenübertragung, bei der Daten von genau einem Nachbarknoten empfangen werden. Eine Broadcast-Datenübertragung, d. h. eine erfolgreiche Übertragung einer einzelnen Dateneinheit zu mehreren Empfangsknoten wird in dem IEEE 802.16-Standard für den Mesh-Betriebsmodus nicht unterstützt. Für eine erfolgreiche Broadcast-Datenübertragung müsste ein Sendeknoten bei dem IEEE 802.16-Standard eine Datenübertragungsreservierung in einem Zeitschlitz vornehmen, in dem alle seine Nachbarknoten empfangsbereit sind. Allerdings hängt die Empfangsbereitschaft der benachbarten Knoten von den reservierten Datenübertragungen in der Nachbarschaft des jeweiligen Nachbarknotens ab. Daher ist die Auswahl eines Zeitschlitzes zur Datenübertragung basierend lediglich auf der Kenntnis des Zustandes der eigenen Nachbarknoten für einen Sendeknoten, der eine Broadcast-Datenübertragung durchführen möchte, nicht möglich. Um daher Daten an alle seine Nachbarknoten zu senden, ist der Senderknoten daher darauf angewiesen, die Daten in einer Unicast-Datenübertragung sequentiell an seine Nachbarknoten zu senden.

Es ist häufig notwendig, dass die gleichen Daten an mehrere Empfänger verschickt werden müssen. So werden häufig bei reaktiven Routing-Verfahren Protokollnachrichten an mehrere Nachbarn für die Erkundung eines Pfades zu einem Ziel verschickt. Auf diese Weise verbreiten sich die Nachrichten schnell im ganzen Netzwerk und es kann so schneller das Ziel gefunden werden. Die Verwendung der üblichen Form der Datenübertragung per Unicast hat dabei den Nachteil, dass für jeden Empfänger die Daten extra übertragen werden müssen. Dies ist aber sehr ineffizient, da stets die gleichen Daten übertragen werden. Mit einem Broadcast-Verfahren könnten jedoch mit einer Datenübertragung gleichzeitig mehrere Empfänger erreicht werden. Leider bietet 802.16 derzeit keine Unterstützung für den Broadcast von Datenpaketen an. Es gibt zwar einen Broadcast, der ist aber nur für die Übertragung von MAC-Management im Control-Subframe Nachrichten gedacht. Dieser Mechanismus ist nicht für den eigentlichen Datenverkehr geeignet. Es beherrscht den Versand von Datenpakete an mehrere Empfänger und garantiert dabei eine kollisionsfreie Übertragung.

EP-A-1 594 268 offenbart eine Multicast-Übertragung von Daten von einem Sendeknoten zu mehreren Empfangsknoten in einem Telekommunikationsnetz. Dabei können Zeitschlitze für eine Kommunikation zwischen dem Sendeknoten und den Empfangsknoten reserviert werden. Jeder Knoten beinhaltet einen Datenschlitz-Reservierungsindikator, in dem angegeben ist, welche Zeitschlitze frei sind, welche reserviert sind und welche belegt sind. Dieser Indikator eines jeden Knotens wird an die jeweils anderen Knoten übermittelt, so dass diese jederzeit wissen, welche Zeitschlitze für eine Kommunikation mit den anderen Knoten frei sind. Wenn der Sendeknoten von dem Empfangsknoten Datenschlitz-Antwortinformationselemente empfängt, die die Reservierung der Zeitschlitze akzeptieren, so sendet er Datenschlitz-Anerkennungselemente an diese Empfangsknoten. Diese Empfangsknoten erwarten dann die Übertragung von Daten. Als nächstes sendet dann der Sendeknoten die Daten an die Empfangsknoten, die Zeitschlitze reserviert hatten.

Pedro Francisco Robles Rico: "Investigation of IEEE standard 802.16 Medium Access Control (MAC) layer in Distributed Mesh Networks and comparison with IEEE 802.11 ad-hoc networks" THESIS, [Online] http://www.diva-portal.org/diva/getDocument?urn _nbn_se_liu_diva-6908-1_fulltext.pdf beschreibt den Standard IEEE 802.16 Medium Access control (MAC) Layer in sogenannten Distributed Mesh Networks. Für die Reservierung von Zeitschlitzen wird ein 3-Wege-Quittungsaustausch in einem 802.16 Maschen-Netzwerk mittels MSH-DSCH-Nachrichten durchgeführt.

WO 02/21769 A offenbart ein Telekommunikationsnetzwerk, in dem sich nebeneinander angeordnete Knoten über ein Ablaufschema für eine konfliktfreie Übertragung zwischen ihnen verständigen. Es wird hierbei eine konfliktfrei Übertragung von Unicast-, Multicast- und Broadcast-Paketen über drahtlose Kanäle gewährleistet.

Es ist daher die Aufgabe der vorliegenden Erfindung, ein Verfahren, einen Netzwerkknoten und ein System zur Broadcast-Übertragung von Daten in einem Netz zu schaffen.

Diese Aufgabe wird erfindungsgemäß durch ein Verfahren mit den im Patentanspruch 1 angegebenen Merkmalen, durch einen Netzwerkknoten gemäß Anspruch 12 und ein System gemäß Anspruch 14 gelöst. Im Weiteren werden bevorzugte Beispiele des erfindungsgemäßen Verfahrens unter Bezugnahme auf die beigefügten Figuren zur Erläuterung erfindungswesentlicher Merkmale beschrieben.

Es zeigen:
- Figur 1:: ein Diagramm zur Erläuterung einer Broadcast-Datenübertragung bei dem erfindungsgemäßen Verfahren;
- Figur 2:: ein Diagramm zur Erläuterung der Datenstruktur eines Rahmens, der zur Broadcast-Datenübertragung bei dem erfindungsgemäßen Verfahren eingesetzt wird;
- Figur 3:: ein Signaldiagramm zur Erläuterung des bei dem erfindungsgemäßen Verfahren eingesetzten Drei-Wege-Handshake-Mechanismus;
- Figur 4:: ein Signaldiagramm für ein Beispiel zur Erläuterung der Funktionsweise des erfindungsgemäßen Verfahrens;
- Figuren 5A, 5B:: Tabellen für mögliche Nachrichtenformate gemäß dem erfindungsgemäßen Verfahren;
- Figur 6:: ein Beispiel für die Auswahl von Empfangs-Intervallen von Broadcast-Empfängern bei dem erfindungsgemäßen Verfahren;
- Figur 7:: ein mögliches Beispiel für einen Algorithmus zur Bestimmung des Intervalls für den Broadcast-Empfang gemäß der Erfindung;
- Figur 8:: ein Diagramm zur Erläuterung der Funktionsweise des erfindungsgemäßen Verfahrens.

Bei dem erfindungsgemäßen Verfahren werden Nachrichtenelemente (IE) für die Reservierung von Bandbreite für den Broadcast aus dem Unicast übernommen. Das im Unicast verwendete Datenfeld Link ID wird für Broadcast IE in allen Nachrichtenformaten als Broadcast ID bzw. Übertragungs-ID mit einer anderen Funktion verwendet.
Ergänzend wird in der Broadcast-Anforderungsnachricht (MSH-DSCH: Request_IE) ein im Standard zwar vorgesehenes, jedoch bisher ungenutztes Bit für die Kennzeichnung des Request_IE als Broadcast Request IE verwendet (Broadcast Flag)
In der Gewährnachricht MSH-DSCH: Grant_IE wird ein zusätzliches 16 Bit Feld hinzugefügt, das eine Knotenidentität (Node ID) aufnehmen kann.
Nachrichtenelemente (MSH-DSCH Request IE, MSH-DSCH Grant IE) bilden bei einem Beispiel des erfindungsgemäßen Verfahrens keine eigenständigen Protokollnachrichten sondern sind Elemente einer MSH-DSCH-Nachricht, die diese Elemente enthält. Verfügbare Zeitschlitze TS werden vorzugsweise nicht dem MSH-DSCH Request IE hinzugefügt sondern sind ebenfalls Elemente der MSH-DSCH-Nachricht.
Eine Bestätigungsnachricht wird vorzugsweise durch eine MSH-DSCH: Grant_IE mit gesetztem Flag (Direction Bit) gebildet.

Die Übertragung von Information Elements IE in MSH-DSCH-Nachrichten erfolgt im Scheduling Control Subframe an alle Nachbarknoten. Der Empfang wird durch ein dezentrales Verfahren gewährleistet, das Übertragungsgelegenheiten im Scheduling Control Subframe eindeutig genau einem Sender SK zugeordnet.
Zeitschlitze TS werden stets in Gruppen von mehreren aufeinander folgenden Zeitschlitzen in einem Übertragungsframe bzw. Rahmen angegeben. Zeitschlitze TS einer Gruppe können auch mehrere Übertragungsrahmen hintereinander gültig sein. Die Anzahl von aufeinander folgenden Zeitschlitzen TS innerhalb eines Übertragungsrahmens ist eine natürliche Zahl, die größer 0 und kleiner der Anzahl der maximalen Zeitschlitze eines Übertragungsrahmens ist. Die Anzahl aufeinander folgenden Übertragungsrahmens, in denen Zeitschlitze TS einer Gruppe gültig sind, ist entweder 1, 2, 4, 8, 32, 128 oder unendlich. Eine Gruppe kann auch aus einem einzelnen Zeitschlitz bestehen. Jeder Zeitschlitz TS einer Gruppe ist genau gleich viel aufeinander folgende Übertragungsrahmens gültig. MSH-DSCH Request IE, MSH-DSCH Grant IE und MSH-DSCH Availability IE sind Informationselemente, die MSH-DSCH Nachrichten hinzugefügt werden, sie stellen für sich gesehen keine kompletten Protokollnachrichten dar. Wenn im Folgenden vom Versand eines MSH-DSCH Request IEs, MSH-DSCH Grant IEs oder MSH-DSCH Availability IEs gesprochen wird, wird implizit der Versand einer MSH-DSCH Nachricht mit dem betreffenden IE gemeint.
MSH-DSCH Nachrichten werden im Scheduling Control Subframe übertragen. Die Übertragung dort gewährleistet den Empfang der MSH-DSCH Nachrichten von sämtlichen Nachbarknoten.

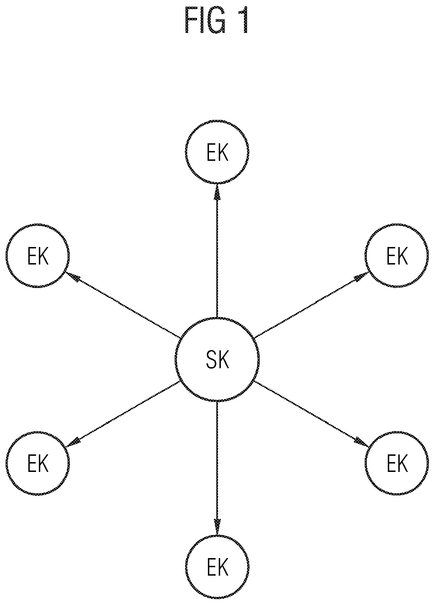

Mit dem erfindungsgemäßen Verfahren ist es möglich, dass ein Sendeknoten SK simultan eine Broadcast-Übertragung zu mehreren Empfangsknoten EK durchführt, wie dies in Figur 1 schematisch dargestellt ist. Die Broadcast-Übertragung der Daten kann dabei entweder in einer ersten Alternative an alle in der Nachbarschaft befindlichen Knoten gleichzeitig gerichtet sein oder als zweite Alternative an eine ausgewählte Untergruppe dieser benachbarten Knoten (Multicast) erfolgen. Bei der zweiten Alternative kann die Broadcast-Übertragung mehrmals wiederholt werden um die Anzahl der erreichten Empfangsknoten EK zu maximieren.

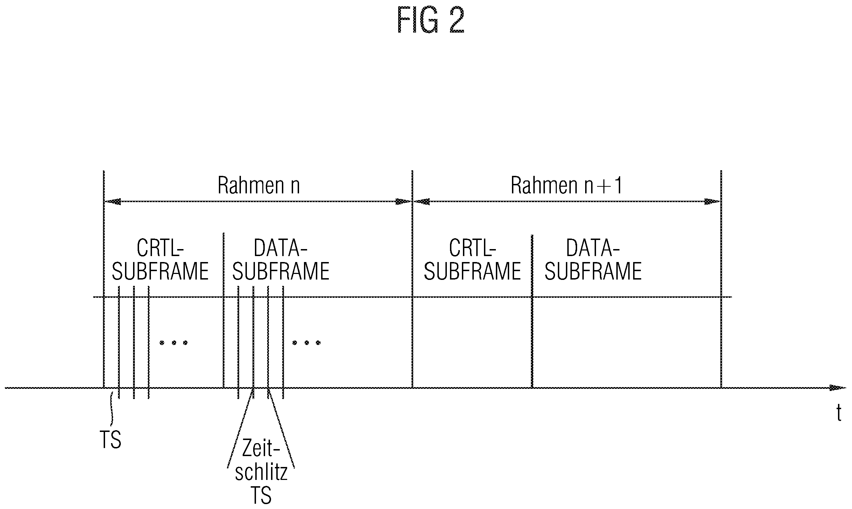

Die Übertragung der Daten erfolgt dabei in Rahmen, die mehrere Zeitschlitze aufweisen, wie in Figur 2 dargestellt ist. Jeder Rahmen ist dabei in einen Steuer-Subframe und in einen Daten-Subframe unterteilt, die ihrerseits in Zeitschlitze TS untergliedert sind. Die Zeitschlitze TS weisen dabei die gleiche Zeitdauer auf. In dem Steuer-Subframe werden Steuernachrichten zwischen den Knoten ausgetauscht. Die eigentliche Datenübertragung geschieht in den Zeitschlitzen des Daten-Subframes. Ein Daten-Subframe weist beispielsweise 98 Zeitschlitze auf, die über die Nummer des Rahmens (frame number), in dem sie übertragen werden und ihre Position im Rahmen identifizierbar sind. Mehrere zusammenhängende (range) Zeitschlitze, die über mehrere (persistence) Rahmen verfügbar sind, bilden ein Intervall bzw. eine Gruppe von Zeitschlitzen TS. Beispielsweise vier zusammenhängende Zeitschlitze beginnend mit Zeitschlitz Nr. 15 über acht Rahmen bilden eine Gruppe von 4 . 8 = 32 Zeitschlitzen TS.

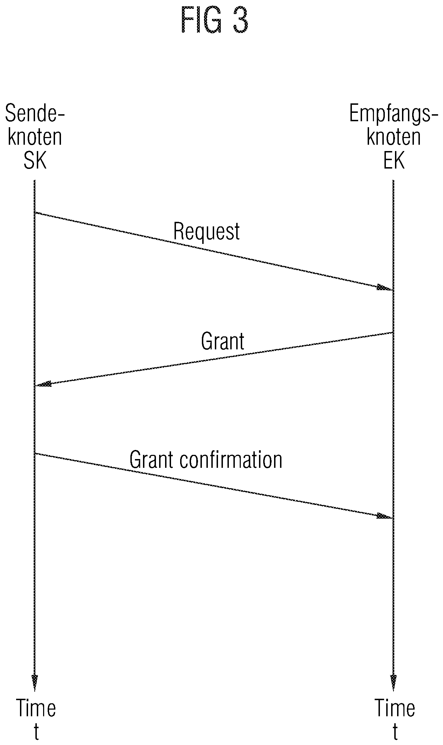

Wie in Figur 3 schematisch dargestellt, sendet bei dem erfindungsgemäßen Verfahren zur Broadcast-Übertragung von Daten der Sendeknoten zunächst eine Broadcast-Anforderung in einer MSH-DSCH Nachricht im Scheduling Control Subframe an die Empfangsknoten EK, wobei in der Broadcast-Anforderung an dem Sendeknoten SK zur Datenübertragung verfügbaren Zeitschlitze TS angegeben werden. Der in Figur 2 dargestellte Rahmen weist beispielsweise 252 Zeitschlitze TS bzw. Slots auf, wobei man die Anzahl der Slots innerhalb des Steuer-Subframes und innerhalb des Daten-Subframes auch dynamisch verändern kann. Bei der Versendung der Broadcast-Anforderungsnachricht (MSH-DSCH Request IE) gibt der Sendeknoten SK diejenigen Zeitschlitze TS an, die für ihn selbst innerhalb des Daten-Subframes zur Datenübertragung zur Verfügung stehen. Dazu fügt der Sendeknoten SK mehrere Gruppen von Zeitschlitzen TS der MSH-DSCH-Nachricht hinzu, die auch das MSH-DSCH Request IE enthält. Bei der Broadcast-Anforderungsnachricht ist zur Kennzeichnung, dass es sich um eine Broadcast- und nicht um eine Unicast-Anforderungsnachricht handelt, vorzugsweise ein Broadcast-Flag bzw. Broadcast-Bit gesetzt.

Anschließend senden die benachbarten Empfangsknoten EK nach Empfang der Broadcast-Anforderung Zeitschlitz-Gewährnachrichten (MSH-DSCH Grant IE) an den Sendeknoten SK zurück. Sendet ein Empfangsknoten EK eine Zeitschlitz-Gewährnachricht an den Sendeknoten SK zurück, gibt der Empfangsknoten EK in der Zeitschlitz-Gewährnachricht eine Gruppe von Zeitschlitzen TS für das Daten-Subframe an, die sowohl für den Sendeknoten SK als auch für diesen Empfangsknoten EK zur Datenübertragung zur Verfügung stehen bzw. den beiden Knoten gemeinsam zur Datenübertragung zur Verfügung stehen.

Der Sendeknoten SK erhält daher im Idealfall von allen benachbarten Empfangsknoten EK jeweils eine Zeitschlitz-Gewährnachricht, die jeweils eine Gruppe von Zeitschlitzen TS enthält. In weiteren Zeitschlitzen im Kontroll-Subframe versendet der Sendeknoten SK anschließend eine Bestätigungsnachricht (MSH-DSCH Grant IE als Grant Confirmation), wobei in der Bestätigungsnachricht alle Gruppen von Zeitschlitze TS angegeben sind, welche von den empfangenen Gewährnachrichten von den verschiedenen Empfangsknoten EK als gemeinsam verfügbar mit dem Sendeknoten SK angegeben sind. Nach der Durchführung des in Figur 3 dargestellten Drei-Wege-Handshake-Mechanismus führt der Sendeknoten SK anschließend eine Broadcast-Übertragung der Daten an die Empfangsknoten in den gemeinsam verfügbaren Zeitschlitzen TS durch.

Jede von dem Sendeknoten SK versendete Broadcast-Anforderung (MSH-DSCH Request IE) weist eine zugehörige Übertragungs-ID bzw. Link-ID auf. Die erfindungsgemäße Broadcast-Übertragung von Daten erfolgt in vier Schritten, vorzugsweise in vier aufeinander folgenden Rahmen, wie sie in Figur 2 dargestellt sind. In einem Steuer-Subframe eines ersten Rahmens versendet der Sendeknoten SK eine Broadcast-Anforderungsnachricht. Anschließend erhält er in dem Steuer-Subframe des nachfolgenden Rahmens die Gewährnachrichten der Empfangsknoten. In dem folgenden Rahmen sendet der Sendeknoten die Bestätigungsnachricht an die Empfangsknoten EK aus. Die Datenübertragung erfolgt dann in den gemeinsam verfügbaren Zeitschlitzen TS des in dem nächsten Rahmen enthaltenen Daten-Subframes. Die von dem Sendeknoten SK versendete Anforderungsnachricht (Request) weist vorzugsweise eine zugehörige Übertragungs-ID zur Kennzeichnung der geforderten Übertragung auf. Erhält ein Empfangsknoten EK eine Broadcast-Anforderung, die einer MSH-DSCH Nachricht hinzugefügt ist, von einem Sendeknoten SK und hat er gemeinsam verfügbare Zeitschlitze TS, sendet er eine oder mehrere entsprechende Zeitschlitz-Gewährnachrichten an den Sendeknoten SK zurück, wobei die Zeitschlitz-Gewährnachricht (MSH-DSCH Grant IE) die gleiche Übertragungs-ID aufweist, wie die empfangene Anforderungsnachricht (MSH-DSCH Request IE). Die Gewährnachricht enthält die Knoten-ID bzw. Node ID des Senderknotens SK. Anhand der enthaltenden Node ID können andere Empfangsknoten EK, die Gewährnachricht einem Senderknoten SK zuordnen. Anhand der Übertragungs-ID erkennt der Sendeknoten, welche empfangenen Zeitschlitz-Gewährnachrichten zu der Broadcast-Anforderung gehören und welche Zeitschlitze TS von den Empfangsknoten EK als gemeinsam verfügbar für die Broadcast-Übertragung angeboten werden. Nach Verarbeitung der Gewährnachrichten, übersendet der Sendeknoten SK ein oder mehrere Bestätigungsnachricht (MSH-DSCH Grant IE als Grant Confirmation), in der alle von den verschiedenen Empfangsknoten EK als gemeinsam angegebene verfügbaren Zeitschlitze TS, die zu der Broadcast-Anforderungsnachricht gehören, angegeben sind.

Vorzugsweise wurde bei Versendung von Nachrichten zwischen den Knoten jeweils von dem sendenden Knoten eine Knoten-Identifizierung angegeben, sodass der empfangende Knoten weiß, von welchem Knoten er die Nachricht erhält. Nach Versenden der Broadcast-Anforderungsnachricht (MSH-DSCH Request IE) speichert der Sendeknoten SK die Knoten-Identifizierung von den Empfangsknoten EK zwischen, von denen er eine entsprechende Zeitschlitz-Gewährnachricht für die Anforderungsnachricht empfängt, die er mit einer Grant Confirmation bestätigt. Im Idealfall erhält der Sendeknoten SK von allen Empfangsknoten EK mindestens eine Zeitschlitz-Gewährnachricht. Ist der Anteil der Empfangsknoten EK, die in Reaktion auf eine Broadcast-Anforderungsnachricht des Sendeknotens SK keine Zeitschlitz-Gewährnachricht zurücksendet relativ hoch und liegt oberhalb eines einstellbaren Schwellenwertes, versendet der Sendeknoten SK die entsprechende Broadcast-Anforderungsnachricht (MSH-DSCH Request IE) erneut und der Ablauf des Broadcasts wiederholt. Dieses Prozedur wird solange wiederholt bis der nötige Anteil an Nachbarknoten erreicht wurde oder der Broadcast n-mal wiederholt wurde.

Wenn ein Empfangsknoten EK eine Anforderungsnachricht erhält, die bei einem Sendeknoten SK verfügbare Zeitschlitze TS angibt und die einen bestimmten Bedarf an Übertragungszeitschlitzen angibt, prüft der Empfangsknoten EK, ob von diesen Zeitschlitzen auch bei ihm entsprechende Zeitschlitze TS verfügbar sind. Ist in dem Empfangsknoten EK keiner der in der Broadcast-Anforderungsnachricht angegebenen Zeitschlitze TS aufgrund bspw. eines Datenempfangs von einem dritten bzw. Fremdknoten verfügbar, versendet der Empfangsknoten EK keine Zeitschlitz-Gewährnachricht.

Hört ein Empfangsknoten EK eine von einem anderen Empfangsknoten EK ausgesendete Zeitschlitz-Gewährnachricht (MSH-DSCH Grant IE) mit und weist die mitgehörte Zeitschlitz-Gewährnachricht die gleiche Übertragungs-ID wie die von dem mithörenden Empfangsknoten EK ursprünglich empfangene Broadcast-Anforderungsnachricht auf und ist die Empfänger-ID identisch mit der Node ID des Broadcasters, sendet der mithörende Empfangsknoten EK seinerseits eine Zeitschlitz-Gewährnachricht mit dieser Übertragungs-ID aus. Diese Zeitschlitz-Gewährnachricht gibt vorzugsweise dieselben Zeitschlitze TS an, wie sie in der von dem anderen Empfangsknoten empfangenen mitgehörten Zeitschlitz-Gewährnachricht angegeben sind, sofern diese Zeitschlitze auch an dem mithörenden Empfangsknoten EK verfügbar sind.

Der Sendeknoten SK gibt beim Versenden der Broadcast-Anforderungsnachricht einen oder mehrere Gruppen verfügbarer Zeitschlitze TS an, beispielsweise einen Bereich von hintereinander angeordneten Zeitschlitzen TS innerhalb des Daten-Subframes. Falls in der Broadcast-Anforderungsnachricht mehrere verfügbare Zeitschlitze TS angegeben sind, kann der Empfangsknoten EK einen für ihn geeigneten Zeitschlitz TS selektieren. Dabei kann der Empfangsknoten EK beispielsweise einen Zeitschlitz TS auswählen, den er in einer anderen Zeitschlitz-Gewährnachricht, die von einem anderen Empfangsknoten EK mit derselben Übertragungs-ID ausgesendet wurde, mitgehört hat. Alternativ wählt der Empfangsknoten einen Zeitschlitz aus, für den er keine Zeitschlitz-Gewährnachricht für eine fremde Unicast-Datenübertragung oder eine fremde Broadcast-Datenübertragung gehört hat.

Für jede empfangene Zeitschlitz-Gewährnachricht, in der der von dem Empfangsknoten EK gewährte Zeitschlitz TS zur Broadcast-Übertragung unterschiedlich ist, sendet der Sendeknoten SK eine Bestätigungsnachricht aus. Allerdings wird keine Bestätigungsnachricht ausgesendet, falls es sich um eine Gewährnachricht für eine Fremd-Datenübertragung handelt oder der Sendeknoten SK eine Bestätigungsnachricht mithört, die den in Betracht gezogenen Zeitschlitz TS enthält. Der Sendeknoten SK wiederholt die Datenübertragung in jedem für die Broadcast-Datenübertragung gewährten bzw. freigegebenen Zeitschlitz.

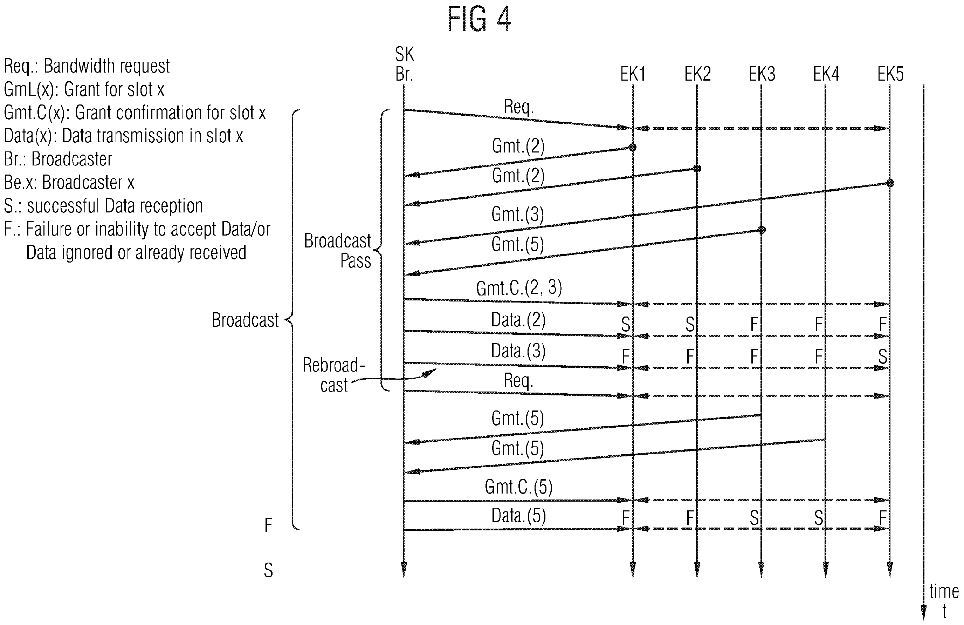

Figur 4 zeigt ein Beispiel für eine Broadcast-Datenübertragung zur Erläuterung des erfindungsgemäßen Verfahrens.

In dem angegebenen Beispiel sendet ein Sendeknoten SK zunächst eine Broadcast-Anforderungsnachricht (MSH-DSCH mit Request IE und mehreren Availability_IEs), die von alle benachbarten fünf Empfangsknoten EK empfangen wird. In der Anforderungsnachricht gibt der Sendeknoten SK beispielsweise an, dass die Zeitschlitze 2, 3, 5 für ihn zur Broadcast-Datenübertragung zur Verfügung stehen. In dem dargestellten Beispiel sendet der Empfangsknoten EK1, der Empfangsknoten EK2, der Empfangsknoten EK5 sowie der Empfangsknoten EK3 eine Zeitschlitz-Gewährnachricht zurück, wobei der Empfangsknoten EK1 und der Empfangsknoten EK2 angeben, dass für sie der Zeitschlitz 2 zur Verfügung steht. Der Empfangsknoten EK3 gibt an, dass der Zeitschlitz 5 für ihn möglich wäre und der Empfangsknoten EK5 weist den Zeitschlitz 3 als verfügbar aus. Der Sendeknoten SK wertet die vier erhaltenen Zeitschlitz-Gewährnachrichten aus und bestätigt in einer Bestätigungsnachricht, dass er die Broadcast-Datenübertragung in den Zeitschlitzen 2, 3 durchführen möchte. In dem angegebenen Beispiel erfolgt keine Bestätigung für den von dem Empfangsknoten 5 gewünschten Zeitschlitz 5. Die Zeitschlitz-Gewährnachricht wird an alle fünf Empfangsknoten übertragen.

Anschließend erfolgt die Broadcast-Übertragung der Daten zunächst im Zeitschlitz 2, sodass die Empfangsknoten EK1 und EK2 erfolgreich Daten empfangen während die übrigen Empfangsknoten EK3, EK4, EK5 nicht erfolgreich die Daten empfangen. Anschließend erfolgt eine erneute Aussendung der Daten bzw. ein Re-Broadcast durch den Sendeknoten SK in dem Zeitschlitz 3, sodass die Daten durch den Empfangsknoten EK5 nunmehr erfolgreich empfangen werden. Da noch nicht alle Empfangsknoten EK die Broadcast-Daten empfangen haben, d. h. die Empfangsknoten EK3 und EK4, sendet der Sendeknoten SK eine neue Broadcast-Anforderungsnachricht (Request) aus.

In dem angegebenen Beispiel senden die beiden Empfangsknoten EK3, EK4 Zeitschlitz-Gewährnachrichten (Grant) für den Zeitschlitz TS=5 an den Sendeknoten SK zurück. EK1, EK2, EK5 reagieren auf die Anforderungsnachricht nicht, da sie anhand der Absender-Node-ID der Anforderungsnachricht und der darin enthaltenen Übertragungs-ID erkennen, dass sie den Broadcast bereits empfangen haben. Anschließend überträgt der Sendeknoten SK eine Bestätigungsnachricht für den Zeitschlitz 5. Schließlich erfolgt die Datenübertragung an die Empfangsknoten EK3, EK4 in dem bestätigten Zeitschlitz 5.

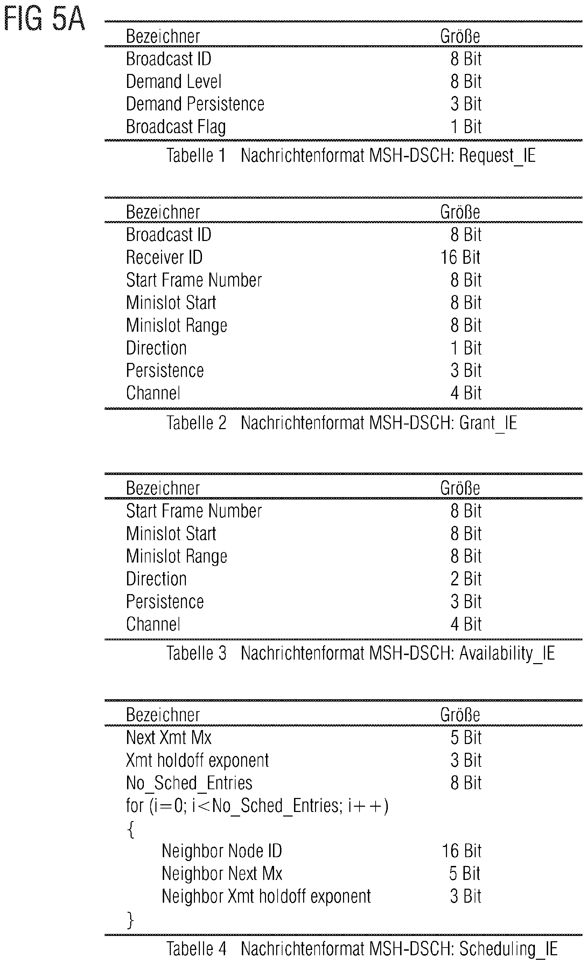

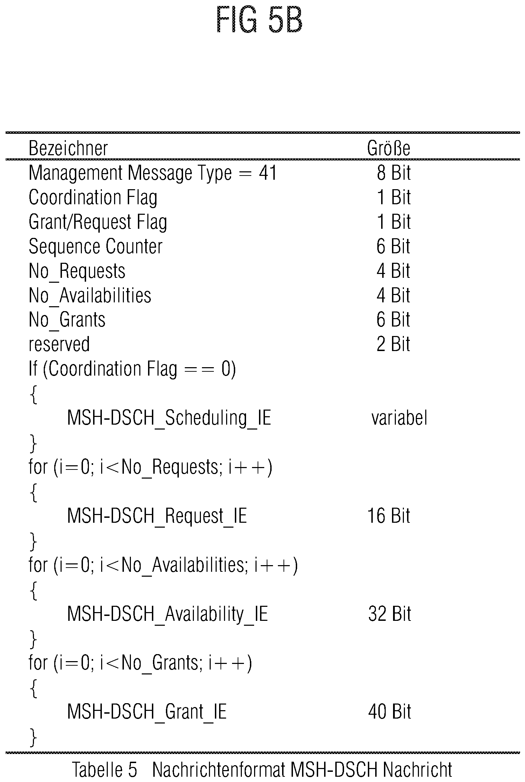

Die Figuren 5A, 5B zeigen Nachrichtenformate wie sie bei einem Beispiel des erfindungsgemäßen Verfahrens verwendet werden.

Figur 5A zeigt in Tabelle 2 ein mögliches Datenformat für eine Anforderungsnachricht (MSH-DSCH Grant IE) nach dem IEEE 802.16-Standard. Beispielsweise kann ein Link-ID-Field für eine Übertragungs-ID (auch Broadcast-ID genannt) verwendet werden. Verschiedene Sendeknoten SK senden dabei unterschiedliche Übertragungs-IDs. Jede Datenübertragung eines Sendeknotens SK hat eine individuelle Übertragungs-ID. Jeder Sendeknoten wählt eine unterschiedliche Übertragungs-ID für unterschiedliche gleichzeitig erfolgende Vorgänge. Eine verwendete Datenübertragungs-ID ist vorzugsweise für eine bestimmte vorgegebene Zeitperiode gültig während derer sie nicht für eine anderen Broadcast oder Nachbarverbindung eingesetzt werden darf. Nach Ablauf der Gültigkeitsperiode kann die Übertragungs-ID wieder für andere Übertragungen verwendet werden. Die Übertragungs-ID kann beispielsweise zufällig durch den Sendeknoten SK aus einer Gruppe von gültigen Übertragungs-IDs ausgewählt werden.
Eine Zahl aus [0,255] ist dann gültig als Übertragungs-ID, wenn sie nicht die Transmit-Link ID Xmt-Link-Id einer Unicast-Nachbar-Verbindung (Link) in der Richtung Broadcaster SK zum Nachbarknoten verwendet wird.
Mit den Felder Demand Level und Demand Persistence wird der Bandbreitenbedarf angegeben. Die Anzahl der benötigten Zeitschlitze TS ergibt sich aus der Multiplikation des Wertes in Demand Level mit dem i-ten Element aus der Folge <0,1,2,4,8,32,128,unendlich>, wobei i gleich dem Wert aus Demand Level ist.
Das gesetzte Broadcast Bit gibt an, ob das Request IE einen Broadcast ankündigt. Ein nicht gesetztes Broadcast Bit kündigt ein Unicast Request IE an.

Figur 5A zeigt in Tabelle 3 ein mögliches Datenformat für eine Nachricht, die die Verfügbarkeit der Zeitschlitze TS angibt. Die Verfügbarkeitsnachricht gibt eine Gruppe von Zeitschlitzen an, die für den Sender der Datenübertragung in Frage kommen. Der Empfangsknoten wählt anschließend auf der Grundlage seines eigenen Sets an verfügbaren Zeitschlitzen TS einen Bereich bzw. eine Menge von Zeitschlitzen aus, die gemeinsam verfügbar sind.

Figur 5A zeigt ferner in Tabelle 2 ein mögliches Datenformat für eine Zeitschlitz-Gewährnachricht bzw. Grant-Nachricht. Vorzugsweise wird dabei das Direction-Field benutzt, um eine Zeitschlitz-Gewährnachricht (Grant-Nachricht) von einer Bestätigungsnachricht (Grant Confirmation) zu unterscheiden. Sowohl für eine Gewährnachricht als auch für eine Bestätigungsnachricht spezifiziert das Link-ID-Datenfeld die Übertragungskennung. Die Nachbarknoten, die benachbart zu den beiden in den Anforderungs- und Gewährungsprozess involvierten Knoten liegen, können die Anforderungs-, Gewähr- und Bestätigungsnachrichten mithören und ihre eigenen Verfügbarkeiten updaten bzw. auf den neuesten Stand bringen. Jeder Empfangsknoten EK selektiert unabhängig von den anderen Knoten eine Gruppe von Zeitschlitzen TS, die für ihn verfügbar sind und sendet ein oder mehrere entsprechende Grant-Messages.
Das MSH DSCH Grant IE enthält zusätzlich ein Empfänger_ID Feld in dem die Node ID des gewünschten Empfängers für das Grant eingetragen wird. Handelt es sich bei dem MSH DSCH Grant IE um ein Unicast Grant wird in das Empfänger-Feld immer ein illegaler Wert für die Node ID eingetragen (vorzugsweise 0 oder 2^32-1).

Der Ablauf des Protokolls unterteilt sich in eine Reservierungs- und eine Datenübertragungsphase, beide Phasen zusammen ergeben einen Broadcast-Durchgang. Ein Broadcast kann aus mehreren Broadcast-Durchgängen bestehen, je nachdem ob genügend Nachbarn in den durchgeführten Durchgängen erreicht wurden. Für die Reservierung der Bandbreite werden für das Broadcast-Verfahren die gleichen Nachrichtentypen verwendet wie für die Reservierung im Unicast. Das bedeutet auch, dass die Übertragung der Nachrichten im Scheduling Subframe auf die gleiche Weise durchgeführt wird wie für entsprechende Nachrichten für den Unicast.

Der Broadcaster bzw. Sendeknoten SK initiiert den Broadcast durch den Versand eines Request IE im Scheduling Control Subframe, das in einer MSH-DSCH Nachricht eingebettet ist. Das Request IE entspricht weitestgehend dem Unicast Request IE mit dem Unterschied, dass das vorhandene reservierte Bit als Broadcast-Bit verwendet wird, um das IE als Broadcast-Request zu kennzeichnen. Das Datenfeld Link ID dient dazu den Broadcast zu identifizieren. Üblicherweise dient dieser Wert dazu, die Protokollnachrichten eines Senders einem seiner Links (Verbindungen) zu seinen Nachbarn zuzuordnen. Dieser Zweck muss für den Broadcast nicht mehr erfüllt werden, da eine Nachricht stets an alle Nachbarknoten gerichtet ist. Jedoch ist es notwendig, die einzelnen Broadcasts eines Knotens, die auch parallel stattfinden dürfen, zu unterscheiden. In diesem Kontext wird dieses Datenfeld daher Broadcast ID genannt. Die folgenden beiden Datenfelder Demand Level und Demand Persistence enthalten den Bedarf an Bandbreite für den Broadcast. Der Demand Level gibt die Anzahl der zu reservierenden Minislots bzw. Zeitschlitze an, während die Demand Persistence die Dauer von deren Gültigkeit angibt.

Im folgenden Schritt wählen nun die Empfänger bzw. Emmpfangsknoten EK ein passendes Intervall bzw. Gruppe aus den Availabilities (Verfügbare Intervalle) des Broadcasters bzw. Sendeknotens SK aus, die ebenfalls in der MSH-DSCH Nachricht enthalten sind, die auch das Request IE enthält. Dieses Übertragungsintervall wird dem Sendeknoten SK mittels eines Grant IE mitgeteilt. Jeder Broadcast-Empfänger EK verarbeitet das empfangene Request IE, das er aus der im Scheduling Subframe mitgehörten MSH-DSCH Nachricht entnehmen kann und antwortet, sofern er aufgrund seinen Availabilities ein Empfangsintervall bestimmen konnte, mit einem Grant IE. Für die Erzeugung des Grant IE bzw. Gewährnachricht gelten im Broadcast gemäß dem erfindungsgemäßen Verfahren allerdings andere Regeln als für den konventionellen Unicast. Es ist notwendig, dass alle Broadcast-Empfänger EK so wenig unterschiedliche Intervalle auswählen wie möglich. Dazu ist eigentlich eine Kommunikation zwischen den Request Empfängern notwendig, die im herkömmlichen Protokoll nicht vorgesehen ist. Um dennoch eine Einigung auf die verwendeten Zeitschlitz-Intervalle zu realisieren, wird erfindungsgemäß wie folgt vorgegangen. Der Versand von Grant IEs in MSH-DSCH Nachrichten erfolgt in dem Scheduling Subframe. Die Übertragungen werden dabei dezentral koordiniert und erfolgen daher kollisionsfrei. Somit ist jeder Nachbarknoten EK des Senders SK in der Lage diese Übertragung mitzuhören. Der Broadcast-Empfänger EK, der die Gelegenheit hat, das erste Broadcast Grant IE zu schicken, gibt ein beliebiges Intervall vor, das für ihn und für den Empfang verfügbar ist. Alle Nachbarknoten dieses Broadcast-Empfängers EK können dieses Grant IE mithören. Der nächste Knoten, der an der Reihe ist im Scheduling Subframe zu übertragen, überprüft das Intervall aus dem empfangenen Grant IE, ob es für ihn auch verfügbar ist. Ist das der Fall, wählt er dieses Intervall ebenfalls für sein Grant IE bzw. seine Gewährnachricht aus und überträgt diese, sobald er an der Reihe ist im Scheduling Subframe. Diese Prozedur setzt sich für jeden Broadcast-Empfänger EK fort. Stehen für einen Knoten EK mehrere empfangene Intervalle zur Auswahl, wählt er das Intervall aus, das er am häufigsten empfangen hat, da dieses Intervall die besten Aussichten hat, wie nachher noch beschrieben wird, tatsächlich durch den Sendeknoten SK bestätigt zu werden. Sollte für einen Empfänger EK kein Intervall verfügbar sein, wählt er dementsprechend ein neues, freies Intervall, das sich mit keinem empfangenen Intervall überschneidet. Sollte er kein Intervall finden, das sich nicht mit den Intervallen aus den mitgehörten Grants schneidet, wählt er irgendein freies Intervall aus. Der Broadcaster SK nimmt alle Grants entgegen und wählt für die Grant Confirmation bzw. die Bestätigungsnachricht die Intervalle aus, die sich nicht überschneiden. Kommt es jedoch bei verschiedenen Grants zu Überschneidungen, wird er das Intervall bestätigen, das in den meisten Grants enthalten war. Das Auswahlverfahren der Empfängerknoten EK ist zwar kooperativ, da zuerst solche Intervalle gewählt werden, die zu keinen Konflikten führen, jedoch kann die bewusste Auswahl eines überschneidenden Intervall dazu führen, dass letztendlich mehr Knoten durch den Broadcast erreicht werden, weil mehr Knoten in diesem Intervall empfangsbereit sind.

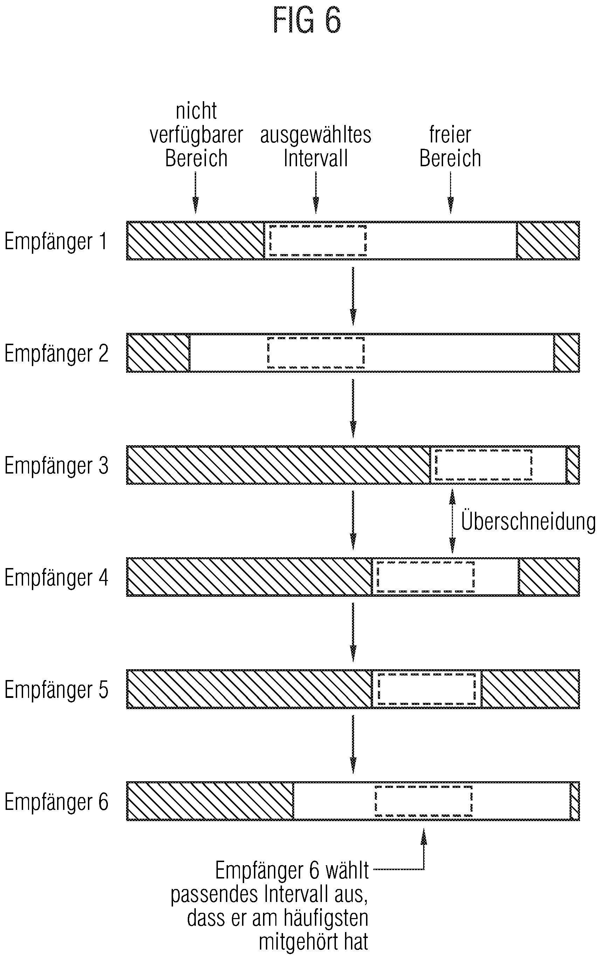

Figur 6 zeigt ein Beispiel für die Auswahl von Empfangsintervallen von Broadcast-Empfängern.

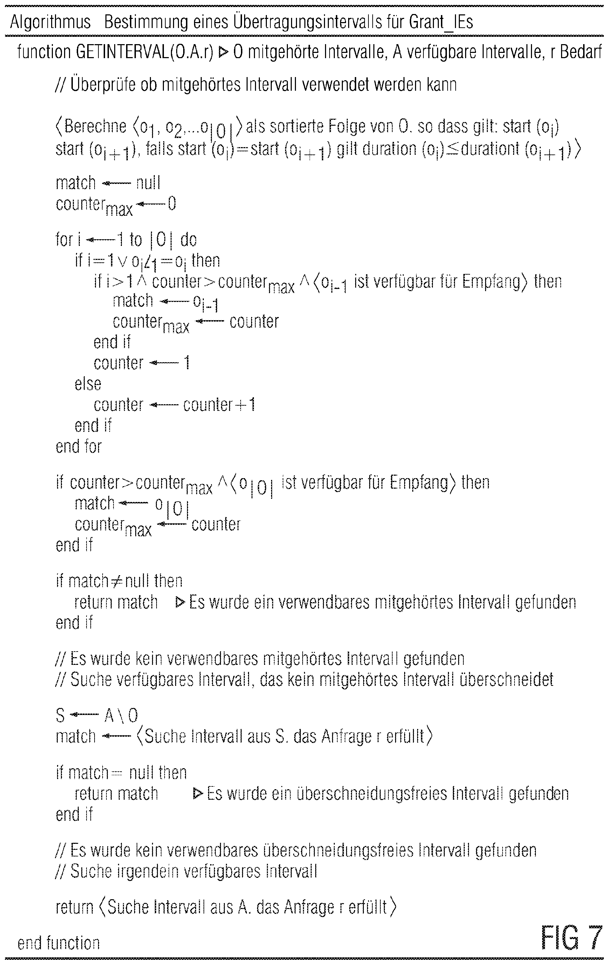

In Figur 7 ist der Algorithmus zur Bestimmung des Intervalls für den Broadcast-Empfang dargestellt. 0 ist die Menge der Intervalle aller empfangen Grants, A sind die für den Empfang verfügbaren Intervalle, r ist der Bedarf aus der empfangenen Request-Nachricht. Für die Auswahl von Intervallen durch benachbarte Broadcast-Empfänger EK ergibt sich aber folgendes Problem. Es ist ohne Veränderung des Nachrichtenformats des Grant IE nicht möglich das Grant IE eindeutig einem Broadcast von einem bestimmten Broadcaster SK zuzuordnen. Das Problem entsteht dadurch, dass von dem mitgehörten Grant IE nur die Broadcast ID sowie der Absenderadresse des Senders SK, also des anderen Broadcast-Empfängers, bekannt ist. Zwar kann mit einer gewissen Wahrscheinlichkeit anhand der Broadcast ID auf den Urheber des Broadcasts Rückschlüsse gehalten werden. Jedoch besteht auch eine Wahrscheinlichkeit von 1 : 256 das das Grant IE für den Broadcast eines anderen Broadcasters SK gedacht ist, der zufälligerweise dieselbe Broadcast ID gewählt hat. Um diesem Konflikt aus dem Weg zu gehen und um zu vermeiden, dass mit einer gewissen Wahrscheinlichkeit eine Kollision durch falsche Zuordnung von Grant IE zum Broadcast entsteht, wird das Grant IE bzw. Gewährnachricht um ein zusätzliches Datenfeld Receiver ID erweitert, das die Node ID bzw. Knoten-ID des Broadcasters enthält. Durch die Kombination aus Receiver ID und Broadcast ID ist eine eindeutige Zuordnung von einem mitgehörten Grant IE zu einem bestimmten Broadcast möglich.

Der Broadcaster SK hört die versendeten Grant IE mit, seine Aufgabe ist nun die Intervalle, die zulässig sind, mit einer Grant Confirmation Nachricht zu bestätigen. Dazu muss zunächst die Menge der empfangenen Intervalle gebildet werden. Aus dieser Menge wird eine Liste erzeugt, die nach Häufigkeit der Nennung des Intervalls sortiert ist. Diese Liste wird von oben nach unten abgearbeitet. Das erste Intervall wird überprüft, ob es noch immer für die Übertragung verfügbar ist. Diese Eigenschaft sollte zwar durch die Auswahl Availabilities in der MSH-DSCH Nachricht mit dem Request IE gegeben sein, mittlerweile kann sich das aber geändert haben. Ist es verfügbar, wird es zu der Menge der zu bestätigenden Intervalle hinzugefügt. Die nächsten Intervalle, die nacheinander von der Liste der empfangenen Intervalle genommen werden, werden überprüft, ob sie sich nicht mit einem oder mehreren Intervallen aus der Menge der zu bestätigenden Intervalle überschneiden. Ist dies nicht der Fall werden sie ebenfalls dieser Menge hinzugefügt. Ansonsten werden sie nicht weiter bearbeitet und das Grant IE der Broadcast-Empfänger EK, das diese Intervalle verwendet hat, wird dementsprechend nicht bestätigt. Für alle Intervalle, die in der Menge der zu bestätigenden Intervalle enthalten sind, wird eine Grant Confirmation verschickt. Diese Grant Confirmation ist ein entsprechendes Grant IE, die als Grant Confirmation gekennzeichnet ist. Es ist anzumerken, dass für ein Request IE, sei es nun Unicast oder Broadcast, mit mehreren verschiedenen Intervallen, also mehreren Grant IEs, erfüllt werden kann. In diesem Fall ist es wichtig, dass eine Grant oder Grant Confirmation nur genau dann verschickt werden darf, wenn jedes einzelne Teilintervall zulässig ist. Es muss speziell beim Broadcast gewährleistet sein, dass nur die komplette Bandbreite des Requests reserviert wird. Zu diesem Zweck werden auf Empfängerals auch auf Senderseite so genannte Grant Bundles verwendet. Ein Grant-Bundle ist eine Menge von Teilintervallen, die in ihrer Addition die entsprechende Bandbreite umfassen. Im Folgenden wird zur Vereinfachung nicht zwischen Intervallen und Grant Bundles unterschieden. Die Behandlung von Grant Bundles erfolgt analog zu der von Intervallen. Es wird angenommen, dass ein Request mit einem Grant Intervall bedient werden kann.

Für Empfängerknoten EK, die eine Grant Confirmation für ihr ausgewähltes Intervall empfangen, ist die Reservierung geglückt und sie empfangen den Broadcast in dem entsprechenden Intervall. Knoten, deren Intervall nicht bestätigt wurde, haben die Chance den Broadcast trotzdem zu empfangen, wenn sie eine Grant Confirmation für den Broadcast mithören können, die ein Intervall enthält, indem sie ebenfalls empfangsbereit sind. Es entsteht allerdings dann das Problem, das die Nachbarschaft dieses Knotens nicht informiert ist, dass dieser Broadcast nun in einem anderen Intervall empfangen wird. Um den Empfang unter allen Umständen zu gewährleisten, kann der Knoten EK ein Grant schicken, das dieses neue Intervall enthält, die umliegenden Knoten werden das Intervall entsprechend als belegt markieren und der Broadcaster SK wird das Grant ignorieren. Findet sich kein Alternativintervall ist der Broadcast-Durchgang für den Knoten EK gescheitert, in diesem Fall muss er versuchen den Broadcast im nächsten Durchgang zu empfangen.

Der Broadcaster bzw. Sendeknoten SK überträgt in der Datenübertragungsphase die Daten wiederholt in jedem reservierten Intervall. Dabei ist es wichtig, dass die Empfängerknoten EK den Datenempfang einem bestätigten Intervall zuordnen können. Da aus den Protokollinformationen lediglich hervor geht, dass es sich um einen Broadcast handelt, muss gewährleistet sein, dass die wiederholten Übertragungen nur jeweils einmal als solche empfangen und verarbeitet werden. Die Zuordnung der empfangenen Daten zum bestätigten Intervall erfolgt anhand der Minislot-Nummer bzw. Zeitschlitz-Nummer und der Frame-Nummer bzw. Rahmen-Nummer zum Zeitpunkt des Empfangs.

Ein Broadcast besteht aus mehreren Durchgängen, mit denen möglichst viele Nachbarknoten erreicht werden sollen. Aus verschiedenen Gründen gelingt dies aber nicht immer im ersten Durchgang. Um dennoch alle Nachbarn zu erreichen, wird der Durchgang wiederholt. Nachdem die Reservierungsphase eines Broadcast Durchgangs abgeschlossen ist, ermittelt der Broadcaster SK die Anzahl der erreichten Knoten in der Nachbarschaft und bestimmt daraus den Anteil der erreichten Nachbarknoten. Überschreitet der Anteil eine gewisse Grenze bzw. Schwellenwert, gilt der Broadcast als geglückt und muss nicht wiederholt werden. Die Anzahl der erreichten Nachbarknoten lässt sich anhand der Grant Nachrichten bestimmen, die von jedem Nachbarknoten verschickt wurden und die aufgrund ihrer Absenderadresse einem bestimmten Nachbarknoten zuordenbar ist. Für alle Nachbarknoten, deren Intervalle per Grant Confirmation bestätigt wurden, kann davon ausgegangen werden, dass sie den Broadcast auch korrekt empfangen. Die Anzahl der Nachbarknoten ist aufgrund der Charakteristik des 802.16 MACs genau bekannt. Weil Knoten, deren Intervall nicht bestätigt wurde, den Broadcast trotzdem in einem mitgehörten Alternativintervall empfangen können, kann die berechnete Anzahl der erreichten Nachbarn geringer sein als die tatsächliche Anzahl. Sollte für ein Broadcast Durchgang die nötige Grenze für einen erfolgreichen Broadcast nicht erreicht worden sein und wurde der Broadcast bisher weniger als n mal wiederholt, wird ein neuer Broadcast-Durchgang mit derselben Broadcast ID begonnen. Dieser erneute Durchgang gleicht in seinem Ablauf dem ersten. Nachbarknoten, die den Broadcast bereits empfangen haben bzw. ein bestätigtes Intervall für den Datenempfang erhalten haben, ignorieren den Broadcast Request. Sie können den bereits empfangenen Broadcast anhand der Broadcast ID erkennen. Unter Umständen kann es vorkommen, dass ein Broadcaster SK von einer zu geringen Anzahl von erreichten Nachbarn ausgeht, weil er fälschlicherweise annimmt, dass nicht alle Nachbarknoten mit dem Broadcast erreicht worden sind. Dies kann passieren, wenn ein oder mehrere Nachbarknoten ein alternatives Empfangsintervall nutzen. In diesem Fall würde kein Nachbarknoten das Request IE mit einem Grant beantworten und der Broadcaster SK würde daher den Broadcast nicht noch mal wiederholen. Abgesehen von einem unnötig versendeten Request IE hätte das keine negativen Auswirkungen.

Anhand der Broadcast ID können die einzelnen Broadcasts eines Knotens unterschieden werden. Für jeden Broadcast-Durchgang eines Broadcasts wird dieselbe Broadcast ID verwendet, damit die Knoten, die den Broadcast bereits empfangen haben, den Broadcast nicht mit einem neuen Broadcast verwechseln. Aufgrund der beschränkten Anzahl der möglichen Broadcast IDs, müssen verwendete Broadcast IDs nach einer gewissen Weile erneut verwendet werden. Dabei muss gewährleistet sein, dass zwischen zwei Verwendungen eine genügend große Zeitspanne liegt, die den Broadcast Empfänger EK ermöglicht, den Broadcast als abgeschlossen zu erkennen. Ein Broadcast kann von den Broadcast-Empfängern EK als abgeschlossen erkannt werden, wenn er n-mal wiederholt wurde oder eine gewisse Dauer keine Wiederholung stattgefunden hat (weil der Broadcaster alle Broadcast-Empfänger erreicht hat).

Die Bestimmung der Bandbreite für einen Broadcast erfolgt analog zum Unicast, mit dem Unterschied, dass die Bandbreite für den Broadcast im Gegensatz zum Unicast nicht unbegrenzt lang gültig sein darf. Bevor die Bestimmung der Bandbreite erklärt wird, wird noch auf die allgemeinen Probleme mit der Bandbreitenbestimmung eingegangen. Die Art und Weise wie im 802.16 Mesh-Modus gemäß dem IEEE Standard 802.16-2004 die benötigte Bandbreite im Request IE angegeben wird, ist bisher recht schlecht gelöst. Der Bandbreite anfragende Knoten, also der Sender SK, gibt im Request IE im Feld Demand Level die Anzahl der benötigten Minislots bzw. Zeitschlitze Demand Persistence die Anzahl der Frames bzw. Rahmen an, die diese Reservierung gültig sein soll. Das Produkt aus der Anzahl der benötigten Minislots TS und der Persistenz der Reservierung gibt die Menge an Daten an, die übertragen werden soll. Für Reservierungen muss der Sender SK entscheiden, ob die Menge an Daten, die er zu versenden hat, möglichst schnell in vielen Zeitschlitzen TS, die wenige Rahmen lang gültig sind, übertragen will oder ob er die Daten lieber langsamer in wenigen Zeitschlitzen TS, die dafür eine größere Zahl von Rahmen gültig sind, überträgt. Zusätzlich ist die Demand Persistence fest gestaffelt. Bei der Vergabe von Bandbreite werden zwei Ziele verfolgt, deren Erfüllung aber zu einem Zielkonflikt führt. Das erste Ziel ist, die Minimierung der Verzögerung der Datenübertragung. Wenn man ein Intervall als Fläche interpretiert, die in einem kartesischen Koordinatensystem eingetragen werden kann, entspricht das Demand Level der x-Richtung und die Demand Persistence der y-Richtung. Um die Verzögerung zu minimieren, ist es sinnvoll, dass die Anfrage einen möglichst breites und niedriges Format hat. Das zweite Ziel ist die Optimierung der Auslastung des Übertragungskanals. Für Erreichung dieses Zieles sollte die Fläche der Anfrage möglichst genau der Menge entsprechen, die tatsächlich benötigt wird. Das heißt, das Produkt aus Demand Level und Demand Persistence sollte möglichst der benötigten Menge entsprechen. Problematisch ist die Bestimmung von Demand Level und Demand Persistence, so dass beide Ziele erfüllt werden können. Da der Bedarf an Bandbreite erfüllt werden soll, muss das Produkt aus beiden Werten mindestens den Betrag ergeben, der benötigt wird. Um das zweite Ziel zu erfüllen, sollten zwei Faktoren gefunden werden, für die die Differenz von reservierter zur benötigten Bandbreite möglichst gering ausfällt. Erschwerend kommt hinzu, dass beide Faktoren diskret sind und der zweite Faktor (Demand Persistence) nur ausgewählt werden darf. Hier entsteht nun der Zielkonflikt. Die Faktoren, die den Bedarf möglichst genau bilden, minimieren häufig nicht die Übertragungsverzögerung. Um die Übertragungsverzögerung zu minimieren, sollte die Demand Persistence möglichst gering sein. Das kann jedoch bedeuten, dass ein großer Teil der reservierten Bandbreite nicht gebraucht wird. Dieser Überschuss kann auch nicht für andere Übertragungen genutzt werden.

Ein Beispiel für diesen Konflikt sieht wie folgt aus:

| | |
|---|---|
| Bandbreitenbedarf: | 640 Minislots |
| Minislots pro Frame: | 98 Minislots |
| Frame Dauer: | 10 ms |

Optimierung der Auslastung:

| | |
|---|---|
| Demand Level: | 5 Minislots |
| Demand Persistence: | 128 Frames |
| Auslastung: | 100 Prozent |
| Verzögerung: | 1280 ms |

Optimierung der Übertragungsverzögerung:

| | |
|---|---|
| Demand Level: | 98 Minislots |
| Demand Persistence: | 8 Frames |
| Auslastung: | 81,6 Prozent |
| Verzögerung: | 80 ms |

Die herkömmliche Bandbreitenreservierung in 802.16 ist aber auch noch aus einem weiteren Grund schlecht. Der Sender SK gibt mit Demand Level und Demand Persistence, also Breite und Höhe, seiner Bandbreitenbedarfs im Request IE an. Dabei weiß er nicht, ob der Empfänger EK dieses Bandbreitenformat erfüllen kann, Es kann sein, dass der Empfänger EK eigentlich genügend Bandbreite zur Verfügung hat, aber dennoch kein Intervall frei hat, dass dieses Seitenverhältnis hat. Hat er dies nicht, ist nicht spezifiziert wie in dieser Situation vorgegangen wird. Dies ist ein generelles Problem der Reservierung in 802.16 und betrifft nicht nur den Broadcast.

Für die Bestimmung der Bandbreite wird daher erfindungsgemäß wie folgt vorgegangen, wobei die Semantik des Demand Levels und der Demand Persistence verändert wird.

Die Entscheidung welches Format eine Bandbreitenanfrage hat, wird bei dem erfindungsgemäßen Verfahren nicht mehr vom Sender SK (Broadcaster), sondern vom (Broadcast-)Empfänger EK getroffen. Ebenso kann eine Bandbreitenanfrage mit mehreren Intervallen (Grant Nachrichten) erfüllt werden. Der Sender SK gibt in den Feldern Demand Level und Demand Persistence möglichst genau die benötigte Bandbreite an, während der Empfänger EK entscheidet, welches Format die Intervalle haben, die er in seinem Grant schickt. Dabei gibt es die Übereinkunft, dass die Intervalle mindestens die benötigte Bandbreite umfassen und dabei die Übertragungsverzögerung und die Auslastung optimieren. Für die Reservierung von Bandbreite bestimmt der Sender SK bzw. der Broadcaster nach der folgenden Berechnungsvorschrift die Werte für Demand Level und Demand Persistence. Der Empfänger EK wählt nun ein oder mehrere Intervalle aus seinen Availabilities aus, die die empfangene Anfrage erfüllen und dabei die Ziele Übertragungsverzögerung und Auslastung optimieren.

Berechnungsvorschrift - Bestimmung des Bandbreitenbedarfs für Request IEs:

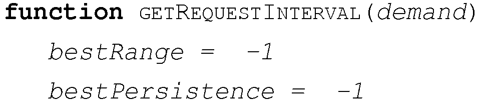

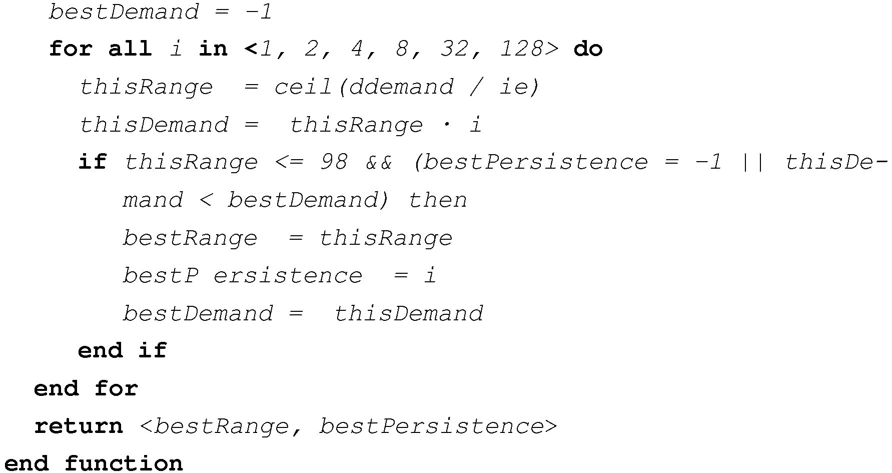

Das vorgestellte Broadcast-Verfahren gemäß der Erfindung ist ebenso kollisionsresistent wie die Datenübertragung im Unicast. Anhand der Mechanismen zur Kollisionsvermeidung, die im Broadcast nahezu genauso angewandt werden wie im Unicast, wird nun gezeigt, dass die Kollisionsresistenz auch für den Broadcast gilt. Mit Hilfe des Drei-Wege-Handshakes werden nicht nur Übertragungsintervalle für Daten ausgehandelt, sondern auch die Nachbarschaft informiert, dass eine Datenübertragung stattfindet. Jeder Knoten, der ein Grant von einem Nachbarknoten mithört, markiert sich das betreffende Intervall als Available for Reception (in den als Available for Reception markierten Minislots kann ausschließlich empfangen werden). Das heißt, der Knoten darf in diesem Intervall ausschließlich empfangen, da er sich in Reichweite des Empfängers befindet. Würde er dennoch senden, käme es bei seinem Nachbarknoten zu einer Kollision, so dass dieser nicht empfangen könnte. Hört der Knoten dagegen ein Intervall aus einer Grant Confirmation mit, muss er dieses Intervall als Available for Transmission (In den als Available for Transmission markierten Minislots kann ausschließlich übertragen werden) markieren, da er sich in Reichweite eines Senders SK befindet und deshalb keine Daten von einem anderen Knoten empfangen kann. Kann ein Knoten sowohl Grant als auch Grant Confirmation mithören, befindet er sich in Reichweite von Sender SK und Empfänger EK und kann deswegen in dem betreffenden Intervall weder senden noch empfangen. Das Intervall wird als Unavailable markiert. Ein Knoten, der selber eine Datenübertragung als Sender oder Empfänger durchführt, ist für das
Übertragungsintervall Unavailable, da Knoten hier nicht in der Lage sind, gleichzeitig zu senden und zu empfangen.

Durch Anwendung dieser Maßnahmen kann es nicht vorkommen, dass der Empfang eines Knotens durch die Übertragung eines anderen Knotens gestört wird. Im Broadcast gibt es jedoch die Veränderung, dass bewusst dasselbe Intervall für das eigene Grant IE ausgewählt wird, dass ein Nachbarknoten für denselben Broadcast zuvor verwendet hat. Auf diese Weise wird erreicht, dass mehrere Knoten in einem Intervall gleichzeitig empfangen können.

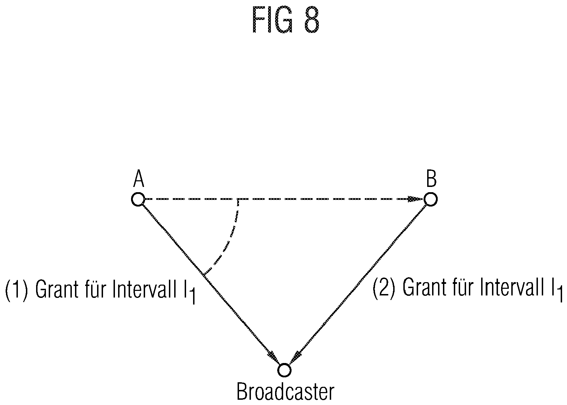

In Figur 8 wählt Knoten B für seine Grant Nachricht das gleiche Intervall aus, dass er zuvor von Knoten A mitgehört hat. Durch die Verwendung der gleichen Intervalle in zwei unterschiedlichen Grants ergibt sich in diesem Fall keine Kollision, da bei beiden Empfängern EK der Sender, nämlich der Broadcaster SK, derselbe ist. Es kann auch nicht durch einen weiteren Sender aus der Nachbarschaft von A oder B zu einer Kollision kommen, da dieser das versendete Grant von A und B ebenfalls empfangen haben muss und deshalb informiert ist, dass Knoten A als auch B in dem betreffenden Intervall empfangen wollen. Es kann auch die Situation eintreten, dass Knoten A ein Intervall auswählt, in dem Knoten B nicht empfangen kann, folglich würde Knoten B ein anderes Intervall für sein Grant wählen. Wenn nun der Broadcaster SK das ausgewählte Intervall von Knoten A mit einer Grant Confirmation bestätigt, wäre der Empfang bei Knoten B gestört. In diesem Fall wäre das aber kein Nachteil für Knoten B. Da Knoten B nicht empfangen kann, bedeutet das, dass ein Knoten in der Nachbarschaft von Knoten B gerade sendet. Jedoch würde daraus kein Problem für Knoten B entstehen, denn Knoten B kann nicht der Empfänger dieser Übertragung sein. Wäre er der Empfänger, hätte das Grant für das Intervall, in dem die Datenübertragung stattfinden würde, vom Broadcaster-Knoten SK empfangen werden müssen, was dazu geführt hätte, dass dieser dieses Intervall nicht mit einer Grant Confirmation bestätigt hätte. Die beschriebene Situation tritt nicht nur ausschließlich beim Broadcast auf, sondern kann auf gleiche Weise auch beim Unicast geschehen. Es könnte nur ein Problem mit Kollisionen entstehen, wenn aufgrund von Störungen oder unterschiedlich großen Sendereichweiten der Empfang von MSH-DSCH Nachrichten nicht erfolgt. Dies wäre ein generelles Problem und würde somit den Unicast als auch den Broadcast gleichermaßen betreffen. Somit ist der erfindungsgemäße Broadcast genauso kollisionsresistent wie der Unicast.

Häufig ist das Erreichen aller Nachbarn mit nur einem Intervall in einem Durchgang nicht möglich, da normalerweise nicht alle Nachbarknoten in der Lage sind, zur gleichen Zeit zu empfangen. Es könnte sein, dass ein Broadcast-Verfahren, das mehrere Übertragungsintervalle und mehrere Durchgänge für einen Broadcast erlaubt, zu einer ineffizienten Ausnutzung der verfügbaren Bandbreite des Kanals führt. Im vorgeschlagenen Verfahren werden die Broadcast-Empfänger EK dazu gebracht, die mitgehörten Intervalle von anderen Nachbarknoten für ihren eigenen Empfang zu verwenden. Dadurch wird die Anzahl der unterschiedlichen Intervalle, in denen die Broadcast-Übertragung stattfindet, stark reduziert. In einem Netzwerk mit einer hohen Konnektivität innerhalb der Nachbarschaft, kann damit gerechnet werden, dass sich die verfügbaren Minislots der Knoten recht stark gleichen. Das führt dazu, dass sich die Knoten sehr gut auf einen oder wenige Intervalle einigen können, da sie zu ähnlichen Zeiten verfügbare Minislots bzw. Zeitschlitze haben. In einem weniger dichten Netzwerk treten diese Effekte möglicherweise weniger stark auf, hier sollte aber generell die Konkurrenz um verfügbare Minislots weniger groß sein. Dies würde die Auswirkungen aufgrund von mehren Broadcast-Übertragungen wieder ausgleichen.

Die Dauer des Drei-Wege-Handshake im Broadcast gemäß der Erfindung lässt sich durchaus mit der Dauer im Unicast vergleichen. Zwar sind im Broadcast in der Regel mehr als zwei Knoten am Handshake beteiligt, jedoch kann gezeigt werden, dass unter Umständen das Handshake im Unicast genauso lang dauert wie ein Broadcast. Die Dauer des Drei-Wege-Handshake im Unicast umfasst die Zeit zwischen Versand der MSH-DSCH Nachricht mit dem Request IE durch den Sender SK und Versand des Grant IE mit der Grant Confirmation ebenfalls durch den Sender SK. Jeder Knoten kann nur dann eine MSH-DSCH Nachricht versenden, wenn er dazu die Erlaubnis hat. Diese Erlaubnis hängt davon ab, ob er eine Mesh-Election gewinnt, deren Ausgang dezentral von jedem Knoten bestimmt werden kann. An dieser Mesh Election darf er nur teilnehmen, wenn er dazu berechtigt (eligible) ist. Es ist im zugrunde liegenden Entwurf von 802.16 vorgesehen, dass ein Knoten nach einer gewissen Hold Off Time nach einer erfolgten Übertragung im Control Subframe eligible wird. Der Zeitpunkt der Übertragung im Control Subframe kann nicht im Voraus bestimmt werden kann, sodass die Länge des Drei-Wege-Handshakes nicht vorhersagbar ist. Prinzipiell kommen alle Knoten nacheinander an die Reihe, so dass davon ausgegangen werden kann, dass ein Knoten erst dann erneut eine Gelegenheit zur Übertragung bekommt, wenn alle anderen Knoten zuvor übertragen haben. Somit richtet sich die Dauer eines (Broadcast-)Handshakes nach der zeitlichen Lage der Gelegenheiten im Control Subframe zu übertragen. Es wäre daher auch möglich, dass ein Unicast-Handshake genauso lang dauert wie ein einzelner Broadcast-Durchgang. Auch die Wiederholung des Handshakes analog zur Wiederholung eines Broadcast-Durchgangs kann für den Unicast notwendig sein. Dies wäre der Fall, wenn das Handshake scheitert.

Die Ergänzung des 802.16 Mesh Modus um ein Broadcast-Verfahren gemäß der Erfindung verträgt sich ohne Probleme mit der Durchführung des Unicasts. Wichtig dabei ist, dass die Zuordnung von Request IE und Grant IE zu Sender SK und Empfänger EK nach wie vor ohne Verwechslungen möglich ist. Üblicherweise wird im Unicast ein Request IE oder Grant IE mit der Absenderadresse und der Link ID einer Verbindung zwischen zwei Knoten zugeordnet. Der Sender SK trägt die Link ID in das Request bzw. Grant IE ein. Die Link ID wird beim Link Establishment der beiden Knoten ausgetauscht und kann auch nur von diesen beiden Knoten einer Verbindung zugeordnet werden. Für jede Richtung der Verbindung wird eine eigene Link ID verwendet. Ein Broadcast Request IE oder Grant IE wird ebenfalls anhand der Absenderadresse und Link ID, die in diesem Zusammenhang Broadcast ID genannt wird, identifiziert. Dabei ist es wichtig, dass ein Broadcaster keine Broadcast ID verwendet, die identisch zu einer Link ID ist, die er für eine seiner Verbindungen verwendet hat. Beide Werte werden im selben Datenfeld gespeichert. Request IEs, die von einem Broadcaster verschickt werden, können niemals mit einem Request IE für eine Verbindung zu einem anderen Knoten verwechselt werden, da zum einen der Broadcast durch das Broadcast Bit gekennzeichnet ist und da der Broadcaster SK stets nur solche Broadcast IDs wählt, die nicht für eine Verbindung zu einem anderen Knoten verwendet wird. Eine Möglichkeit zur falschen Zuordnung gibt es jedoch, und zwar wenn ein Broadcast-Empfänger EK einen Broadcast empfängt dessen Broadcast ID den gleichen Wert hat wie die Link ID einer seiner ausgehenden Verbindungen. In diesem Fall würde ein Grant IE, das als Antwort zu einem Broadcast Request verschickt wird, von dem Verbindungspartner fälschlicherweise als an ihn gerichtet verstanden werden. Zumal auch nicht davon ausgegangen werden kann, dass dieser Verbindungspartner ebenfalls Broadcast-Empfänger dieses Broadcasts ist. Um dieses Problem zu umgehen, besteht die Möglichkeit, dass jeder Knoten die Link IDs auf eine Tabuliste setzt, die von seinen Nachbarknoten für ihre Verbindungen verwendet werden, wobei allerdings die Anzahl der verfügbaren Broadcast IDs reduziert wird. Stattdessen werden die Grant IEs von Unicast und Broadcast-Empfängern anhand der Receiver Node ID, die wegen dem Broadcast eingeführt wurde und dementsprechend auch in einem Unicast Grant IE vorhanden ist, identifiziert. Ein Grant IE wird als Unicast Grant identifiziert, wenn das IE als Grant (Im Gegensatz zu einer Grant Confirmation) gekennzeichnet ist und das Feld Receiver Node ID gleich der Node ID des Absenders des Grant IEs ist. Es wird als Broadcast Grant identifiziert, wenn es als Grant gekennzeichnet ist und die Receiver Node ID einen Wert hat, der ungleich der Absender Node ID ist. Da ein Broadcast-Empfänger EK kein Grant für seinen eigenen Broadcast verschickt, kann es so zu keiner Verwechslung mehr kommen. Für den Versand von Grant Confirmations kann es zu keiner Verwechslung kommen, da diese wiederum eine Broadcast ID enthält, die in keiner Kombination aus Absenderadresse und Link ID für eine Verbindung zu einem Knoten verwendet wird.

Das erfindungsgemäße Verfahren stellt einen verlässlichen Mechanismus zur Übermittlung von Broadcast- und Multicast-Nachrichten in Mesh-Netzen dar, die auf dem IEEE 802.16-Standard basieren. Dabei erfolgt eine garantierte Datenzustellung (Reliable Broadcast). Die Reservierung der Zeitschlitze TS erfolgt koordiniert, sodass die Anzahl der reservierten Zeitschlitze TS zur Broadcast-Datenübertragung in dem erfindungsgemäßen Verfahren minimiert wird.

## Patentansprüche

1. Verfahren zur Broadcast-Übertragung von Daten in Rahmen, die mehrere Zeitschlitze TS aufweisen, von einem Sendeknoten SK zu mehreren Empfangsknoten EK in einem Netz,
wobei das Verfahren die folgenden Schritte aufweist:
- Versenden mindestens einer Broadcast-Anforderung MSH-DSCH Request IE in einer MSH-DSCH-Nachricht von dem Sendeknoten SK an die Empfangsknoten EK, wobei die bei dem Sendeknoten SK zur Datenübertragung verfügbaren Zeitschlitze TS in der MSH-DSCH-Nachricht hinzugefügt werden, und wobei in der MSH-DSCH-Nachricht die bei dem Sendeknoten SK zur Datenübertragung verfügbaren Zeitschlitze TS in Gruppen angegeben werden;
- Zurücksenden von mehreren Zeitschlitz-Gewährnachrichten MSH-DSCH Grant IE in MSH-DSCH-Nachrichten von den Empfangsknoten EK, wobei mindestens einer bei dem jeweiligen Empfangsknoten EK zur Datenübertragung jeweils gemeinsam mit einem bei dem Sendeknoten SK verfügbarer Zeitschlitz angegeben wird;
- Versenden von einer Bestätigungsnachricht MSH-DSCH Grant IE von dem Sendeknoten SK an die benachbarten Empfangsknoten EK, wobei in der Bestätigungsnachricht MSH-DSCH Grant IE alle Gruppen von Zeitschlitzen TS angegeben werden, welche von den empfangenen Zeitschlitz-Gewährnachrichten MSH-DSCH Grant IE von den verschiedenen Empfangsknoten EK als gemeinsam verfügbar mit dem Sendeknoten SK angegeben werden;
- Durchführen einer Broadcast-Übertragung der Daten von dem Sendeknoten SK, die an mehrere Empfangsknoten EK gerichtet ist, in den gemeinsam verfügbaren Zeitschlitzen TS,
wobei, wenn ein Anteil der Empfangsknoten EK, die zu einer Broadcast-Anforderung MSH-DSCH Request IE des Sendeknotens SK eine Zeitschlitz-Gewährnachricht MSH-DSCH Grant IE zurückgesendet haben, unterhalb eines einstellbaren Schwellenwertes liegt, der Sendeknoten SK die entsprechende Broadcast-Anforderung MSH-DSCH Request IE erneut versendet.

2. Verfahren nach Anspruch 1,
wobei die von dem Sendeknoten SK versendete Broadcast-Anforderungsnachricht MSH-DSCH Request IE eine zugehörige Übertragungs-ID aufweist.

3. Verfahren nach Anspruch 1 oder 2,
wobei die von dem Sendeknoten SK versendete Broadcast-Anforderungsnachricht MSH-DSCH Request IE ein gesetztes Broadcast-Flag aufweist zur Kennzeichnung, dass es sich bei der Anforderungsnachricht um eine Anforderung für eine Broadcast-Übertragung handelt.

4. Verfahren nach einem der vorangehenden Ansprüche,
wobei die von einem Empfangsknoten EK zurückgesendete Zeitschlitz-Gewährnachricht MSH-DSCH Grant IE eine Übertragungs-ID aufweist, welche angibt, zu welcher durch den Empfangsknoten EK empfangenen Anforderungsnachricht sie gehört.

5. Verfahren nach einem der vorangehenden Ansprüche,
wobei die von den Empfangsknoten EK zurückgesendete Zeitschlitz-Gewährnachricht MSH-DSCH Grant IE eine Knoten-ID des Sendeknotens aufweist, welche angibt, zu welchem Empfangsknoten EK sie gehört.

6. Verfahren nach einem der vorangehenden Ansprüche,
wobei der Sendeknoten SK die Bestätigungsnachricht MSH-DSCH Grant IE mit einer Übertragungs-ID versendet,
wobei in der Bestätigungsnachricht MSH-DSCH Grant IE alle Gruppen von aufeinanderfolgenden Zeitschlitzen enthalten sind, die zuvor in Bestätigungsnachrichten, die mit der bestimmten Übertragungs-ID markiert sind, von dem Empfangsknoten EK erhalten wurden und die zulässig für die Bestätigung sind.

7. Verfahren nach einem der vorangehenden Ansprüche,
wobei die Knoten Knoten-Identifizierungen aufweisen, die in den von den Knoten jeweils gesendeten Nachrichten übertragen werden.

8. Verfahren nach einem der vorangehenden Ansprüche,
wobei der Sendeknoten SK nach Versenden einer Broadcast-Anforderung MSH-DSCH Request IE die Knoten-IDs derjenigen Empfangsknoten EK zwischenspeichert, von denen der Sendeknoten SK eine Zeitschlitz-Gewährnachricht MSH-DSCH Grant IE zu dieser Broadcast-Anforderungsnachricht empfangen hat.

9. Verfahren nach einem der vorangehenden Ansprüche,
wobei, wenn ein Empfangsknoten EK nach Empfang einer Broadcast-Anforderung MSH-DSCH Request IE mit einer zugehörigen Übertragungs-ID eine Zeitschlitz-Gewährnachricht MSH-DSCH Grant IE von einem anderen Empfangsknoten EK mit einer identischen Übertragungs-ID empfängt, der Empfangsknoten (EK) seinerseits eine Zeitschlitz-Gewährnachricht MSH-DSCH Grant IE mit dieser Übertragungs-ID sendet,
wobei in dieser Zeitschlitz-Gewährnachricht MSH-DSCH Grant IE dieselben Zeitschlitze TS angegeben werden, wie sie in der von dem anderen Empfangsknoten EK empfangenen Zeitschlitz-Gewährnachricht MSH-DSCH Grant IE angegeben sind.

10. Verfahren nach einem der vorangehenden Ansprüche,
wobei das Netz durch ein Mesh-Netz oder ein WiMax-Mesh-Netz gebildet wird.

11. Verfahren nach Anspruch 1,
wobei die Knoten durch mobile Endgeräte oder Basisstationen gebildet werden.

12. Netzwerkknoten zur Broadcast-Übertragung von Daten in Rahmen, die mehrere Zeitschlitze TS aufweisen, zu mehreren Empfangsknoten EK in einem Netz, aufweisend eine Prozessiereinrichtung und eine Sende/Empfangseinrichtung, die derart ausgestaltet sind, dass
- von dem Netzwerkknoten mindestens eine Broadcast-Anforderung MSH-DSCH Request IE in einer MSH-DSCH-Nachricht an die Empfangsknoten EK gesendet wird, in der die bei dem Netzwerkknoten zur Datenübertragung verfügbaren Zeitschlitze TS angegeben sind, und wobei in der MSH-DSCH-Nachricht die bei dem Sendeknoten SK zur Datenübertragung verfügbaren Zeitschlitze TS in Gruppen angegeben sind;
- der Netzwerkknoten von den Empfangsknoten EK zurückgesendete Zeitschlitz-Gewährnachrichten MSH-DSCH Grant IE, die mindestens einen Zeitschlitz TS angeben, welcher der jeweilige Empfangsknoten EK und der Sendeknoten SK gemeinsam zur Datenübertragung verfügbar haben, empfängt;
- der Netzwerkknoten an die Empfangsknoten EK eine Bestätigungsnachricht MSH-DSCH Grant IE versendet, wobei in der Bestätigungsnachricht MSH-DSCH Grant IE alle Gruppen von Zeitschlitzen TS angegeben sind, welche von den empfangenen Zeitschlitz-Gewährnachrichten MSH-DSCH Grant IE von den verschiedenen Empfangsknoten EK als gemeinsam verfügbar mit dem Sendeknoten SK angegeben sind,
wobei der Netzwerkknoten anschließend eine Broadcast-Datenübertragung der Daten an alle Empfangsknoten EK in diesen gemeinsam verfügbaren Zeitschlitzen TS durchführt, wobei, wenn ein Anteil der Empfangsknoten EK, die zu einer Broadcast-Anforderung MSH-DSCH Request IE des Sendeknotens SK eine Zeitschlitz-Gewährnachricht MSH-DSCH Grant IE zurückgesendet haben, unterhalb eines einstellbaren Schwellenwertes liegt, der Sendeknoten SK die entsprechende Broadcast-Anforderung MSH-DSCH Request IE erneut versendet.

13. Netzwerkknoten gemäß Anspruch 12, ausgestaltet zur Durchführung des Verfahrens gemäß einem der Ansprüche 2 bis 11.

14. System zur Broadcast-Übertragung von Daten in Rahmen, die mehrere Zeitschlitze TS aufweisen, von einem Sendeknoten SK zu mehreren Empfangsknoten EK in einem Netz mit wenigstens einem Netzwerkknoten gemäß Anspruch 12 oder 13.

15. System nach Anspruch 14,
wobei das Netz ein Mesh-Netz oder ein WiMax-Mesh-Netz ist.

16. System nach Anspruch 14 oder 15,
wobei die Knoten mobile Endgeräte oder Basisstationen sind.

## Claims

1. A method for broadcast transmission of data in frames having multiple time slots, TS, from one transmitting node, TN, to multiple receiving nodes, RN, in a network, whereby the method comprises the following steps:
- Transmission of at least one MSH-DSCH-Request-IE broadcast request in an MSH-DSCH message from the transmitting node, TN, to the receiving nodes, RN, whereby the time slots, TS, available for data transmission at the transmitting node, TN, are added in the MSH-DSCH message, and whereby the time slots, TS, available for data transmission at the transmitting node, TN, are indicated group-wise in the MSH-DSCH message;
- Returning multiple MSH-DSCH-grant-IE timeslot-grant messages in MSH-DSCH messages from the receiving nodes, RN, whereby at least one is indicated at the relevant receiving node, RN, for data transmission, together with a time slot available at the relevant transmitting node, TN;
- Transmission of an MSH-DSCH-grant-IE acknowledgment message from the transmitting node, TN, to the adjacent receiving nodes, RN, thereby indicating in the MSH-DSCH-grant-IE acknowledgment message all groups of time slots, TS, indicated as being available together with the transmitting node, TN, by the received MSH-DSCH-grant-IE time-slot-grant messages from the different receiving nodes, RN;
- Performing a broadcast transmission of the data from the transmitting node, SN, directed at multiple receiving nodes, RN, in the jointly available time slots, TS, such that if a portion of the receiving nodes, RN, having returned an MSH-DSCH-grant-IE time-slot-grant message for an MSH-DSCH-request-IE broadcast request from the transmitting node, TN, is situated below an adjustable threshold, then the transmitting node, TN, re-transmits the corresponding MSH-DSCH-request-IE broadcast request.

2. A method according to claim 1, wherein the MSH-DSCH-request-IE broadcast-request message transmitted by the transmitting node, TN, has an associated transmission ID.

3. A method according to claims 1 or 2, wherein the MSH-DSCH-request-IE broadcast-request message transmitted by the transmitting node 2 TN, 2 has a set broadcast flag for designating the request message as a request for a broadcast transfer.

4. A method according to one of the preceding claims, wherein the MSH-DSCH-grant-IE time-slot-grant message returned by a receiving node, RN, has a transmission ID indicating which request message received by the receiving node, RN, it belongs to.

5. A method according to one of the preceding claims, wherein the MSH-DSCH-grant-IE time-slot-grant message returned by the receiving node, RN, has a node ID for the transmitting node, indicating which receiving node, RN, it belongs to.

6. A method according to one of the preceding claims, wherein the transmission node, TN, transmits the MSH-DSCH-grant-IE acknowledgment message with a transmission ID, and wherein the MSH-DSCH-grant-IE acknowledgment message contains all the consecutive time-slot groups previously received by the receiving node, RN, in acknowledgment messages labeled with the specific transmission ID, and permissible for the acknowledgment.

7. A method according to one of the preceding claims, wherein the nodes have node IDs, which are transferred in the messages transmitted by the relevant nodes.

8. A method according to one of the preceding claims, wherein the transmitting node, TN, upon transmitting an MSH-DSCH-request-IE broadcast request, caches the node IDs for the receiving nodes, RN, from which the transmitting node, TN, has received an MSH-DSCH-grant-IE time-slot-grant message for this broadcast-request message.

9. A method according to one of the preceding claims, wherein a receiving node, RN, upon receiving an MSH-DSCH-request-IE broadcast request with an associated transmission ID, receives an MSH-DSCH-grant-IE time-slot grant message from another receiving node, RN, with an identical transmission ID, the receiving node, RN, in turn transmits an MSH-DSCH-grant-IE time-slot-grant message with this transmission ID, whereby in this MSH-DSCH-grant-IE time-slot-grant message, the same time slots, TS, are indicated [the same way] as in the MSH-DSCH-grant-IE time-slot-grant message received from the other receiving node, RN.

10. A method according to one of the preceding claims, wherein the network constitutes a mesh network or a WiMax Mesh Network.

11. A method according to claim 1, wherein the nodes are formed by mobile terminals or base stations.

12. Network nodes for broadcast transmission of data in frames having multiple time slots, TS, for multiple receiving nodes, RN, in a network, comprising a processing device and a transceiver configured such that
- at least one MSH-DSCH-Request-IE broadcast request is transmitted in an MSH-DSCH message from the transmitting node, TN, to the receiving nodes, RN, in which [message] the time slots, TS, available for data transmission at the transmitting node, TN, are indicated, and wherein the time slots, TS, available for data transmission at the transmitting node, TN, are indicated group-wise in the MSH-DSCH message;
- the network node receives from the receiving nodes, RN, MSH-DSCH-grant-IE time-slot-grant messages indicating at least one time slot, TS, which the relevant receiving node, RN, and transmitting node, TN, both share for data transmission;
- The network node transmits an MSH-DSCH-grant-IE acknowledgment message to the receiving node, RN, whereby all groups of time slots, TS, indicated by the MSH-DSCH-grant-IE timeslot grant messages received from the different receiving nodes, RN, as sharing availability with the transmitting node, TN, are indicated in the MSH-DSCH-grant-IE acknowledgment message;
whereby the network node subsequently performs a broadcast transmission of the data to all receiving nodes, RN, in these jointly available time slots, TS, whereby, if a portion of the receiving nodes, RN, having returned an MSH-DSCH-grant-IE time-slot-grant message for an MSH-DSCH-request-IE broadcast request from the transmitting node, TN, is situated below an adjustable threshold, the transmitting node, TN, re-transmits the corresponding MSH-DSCH-request-IE broadcast request.

13. A network node according to claim 12, configured to carry out the method according to one of claims 2 to 11.

14. A system for broadcast transmission of data in frames having multiple time slots, TN, from a transmission node, TN, to multiple receiving nodes, RN, in a network with at least one network node according to claim 12 or 13.

15. A system according to claim 14, wherein the network is a mesh network or a WiMax mesh network.

16. A system according to claims 14 or 15, wherein the nodes are mobile terminals or base stations.

## Revendications

1. Procédé de transmission par radiodiffusion de données dans des trames, qui comprennent plusieurs créneaux temporels TS, d'un noeud d'émission SK vers plusieurs noeuds de réception EK dans un réseau,
dans lequel le procédé comprend les étapes suivantes :
- l'envoi d'au moins une demande de radiodiffusion, MSH-DSCH Request IE, dans un message MSH-DSCH, du noeud d'émission SK aux noeuds de réception EK, dans lequel les créneaux temporels TS disponibles au niveau du noeud d'émission SK pour la transmission de données sont ajoutés dans le message MSH-DSCH, et dans lequel, dans le message MSH-DSCH, les créneaux temporels TS disponibles au niveau du noeud d'émission SK pour la transmission de données sont indiqués dans des groupes ;
- le renvoi de plusieurs messages d'octroi de créneau, MSH-DSCH Grant IE, dans des messages MSH-DSCH par les noeuds de réception EK, dans lequel au moins un créneau temporel disponible au niveau du noeud de réception EK concerné pour la transmission de données est indiqué à chaque fois en commun avec un créneau temporel disponible au niveau du noeud d'émission SK ;
- l'envoi d'un message de confirmation, MSH-DSCH Grant IE, par le noeud d'émission SK aux noeuds de réception voisins EK, dans lequel, dans le message de confirmation MSH-DSCH Grant IE, sont indiqués tous les groupes de créneaux temporels TS qui sont indiqués, par les messages d'octroi de créneau MSH-DSCH Grant IE reçus, par les différents noeuds de réception EK en tant que disponibles en commun avec le noeud d'émission SK ;
- l'exécution d'une transmission par radiodiffusion des données par le noeud d'émission SK, qui est adressée à plusieurs noeuds de réception EK, dans les créneaux temporels TS disponibles en commun,
dans lequel, si une part des noeuds de réception EK, qui ont renvoyé, suite à une demande de radiodiffusion MSH-DSCH Request IE du noeud d'émission SK, un message d'octroi de créneau temporel MSH-DSCH Grant IE, est située en dessous d'une valeur de seuil réglable, le noeud d'émission SK envoie de nouveau la demande de radiodiffusion MSH-DSCH Request IE correspondante.

2. Procédé selon la revendication 1,
dans lequel le message de demande de radiodiffusion MSH-DSCH Request IE envoyé par le noeud d'émission SK comprend une identification de transmission associée.

3. Procédé selon la revendication 1 ou 2,
dans lequel le message de demande de radiodiffusion MSH-DSCH Request IE envoyé par le noeud d'émission SK comprend un drapeau de radiodiffusion activé pour signaler qu'il s'agit, quant au message de demande, d'une demande relative à une transmission par radiodiffusion.

4. Procédé selon l'une quelconque des revendications précédentes, dans lequel le message d'octroi de créneau temporel MSH-DSCH Grant IE renvoyé par un noeud de réception EK comprend une identification de transmission qui indique à quel message de demande reçu par le noeud de réception EK elle est associée.

5. Procédé selon l'une quelconque des revendications précédentes, dans lequel le message d'octroi de créneau temporel MSH-DSCH Grant IE renvoyé par les noeuds de réception EK comprend une identification de noeud du noeud d'émission qui indique à quel noeud de réception EK elle est associée.

6. Procédé selon l'une quelconque des revendications précédentes,
dans lequel le noeud d'émission SK envoie le message de confirmation MSH-DSCH Grant IE avec une identification de transmission,
dans lequel, dans le message de confirmation MSH-DSCH Grant IE sont contenus tous les groupes de créneaux temporels successifs qui ont été obtenus auparavant dans des messages de confirmation, qui sont marqués avec l'identification de transmission définie, par le noeud de réception EK et qui sont valides pour la confirmation.

7. Procédé selon l'une quelconque des revendications précédentes,
dans lequel les noeuds comprennent des identifications de noeud qui sont transmises dans chacun des messages envoyés par les noeuds.

8. Procédé selon l'une quelconque des revendications précédentes,
dans lequel le noeud d'émission SK sauvegarde temporairement, après envoi d'une demande de radiodiffusion MSH-DSCH Request IE, les identifications de noeud de ces noeuds de réception EK par lesquels le noeud d'émission SK a reçu un message d'octroi de créneau temporel MSH-DSCH Grant IE pour ce message de demande de radiodiffusion.

9. Procédé selon l'une quelconque des revendications précédentes,
dans lequel, si un noeud de réception EK reçoit, après réception d'une demande de radiodiffusion MSH-DSCH Request IE avec une identification de transmission associée, un message d'octroi de créneau temporel MSH-DSCH Grant IE d'un autre noeud de réception EK avec une identification de transmission identique, le noeud de réception (EK) envoie, de sa part, un message d'octroi de créneau temporel MSH-DSCH Grant IE avec cette identification de transmission,
dans lequel, dans ce message d'octroi de créneau temporel MSH-DSCH Grant IE sont indiqués les mêmes créneaux temporels TS que ceux qui sont indiqués dans le message d'octroi de créneau temporel MSH-DSCH Grant IE reçu de l'autre noeud de réception EK.

10. Procédé selon l'une quelconque des revendications précédentes, dans lequel le réseau est formé par un réseau maillé ou un réseau maillé WiMax.

11. Procédé selon la revendication 1,
dans lequel les noeuds sont formés par des terminaux ou des stations de base mobiles.

12. Noeud de réseau pour la transmission par radiodiffusion de données dans des trames, qui comprennent plusieurs créneaux temporels TS, vers plusieurs noeuds de réception EK dans un réseau, comprenant une unité de traitement et une unité d'émission/réception qui sont agencées de manière que
- au moins une demande de radiodiffusion MSH-DSCH Request IE est envoyée, par le noeud de réseau, aux noeuds de réception EK dans un message MSH-DSCH dans lequel sont indiqués les créneaux temporels TS disponibles au niveau du noeud de réseau pour la transmission de données, et dans lequel, dans le message MSH-DSCH, les créneaux temporels TS disponibles au niveau du noeud d'émission SK pour la transmission de données sont indiqués dans des groupes ;
- le noeud de réseau reçoit des messages d'octroi de créneau MSH-DSCH Grant IE, renvoyés par les noeuds de réception EK, qui indiquent au moins un créneau temporel TS que le noeud de réception EK concerné et le noeud d'émission SK ont à disposition en commun pour la transmission de données ;
- le noeud de réseau envoie aux noeuds de réception EK un message de confirmation MSH-DSCH Grant IE, dans lequel, dans le message de confirmation MSH-DSCH Grant IE sont indiqués tous les groupes de créneaux temporels TS qui sont indiqués, par le message d'octroi de créneau MSH-DSCH Grant IE reçu, en tant que disponibles par les différents noeuds de réception EK en commun avec le noeud d'émission SK,
dans lequel le noeud de réseau exécute ensuite une transmission de données par radiodiffusion des données à tous les noeuds de réception EK dans ces créneaux temporels TS disponibles en commun, dans lequel, si une part des noeuds de réception EK, qui ont renvoyés, suite à une demande de radiodiffusion MSH-DSCH Request IE du noeud d'émission SK, un message d'octroi de créneau temporel MSH-DSCH Grant IE, est située en dessous d'une valeur de seuil réglable, le noeud d'émission SK envoie de nouveau la demande de radiodiffusion MSH-DSCH Request IE correspondante.

13. Noeuds de réseau selon la revendication 12, agencé pour l'exécution du procédé selon l'une quelconque des revendications 2 à 11.

14. Système de transmission par radiodiffusion de données dans des trames, qui comprennent plusieurs créneaux temporels TS, par un noeud d'émission SK vers plusieurs noeuds de réception EK dans un réseau avec au moins un noeud de réseau selon la revendication 12 ou 13.

15. Système selon la revendication 14,
dans lequel le réseau est un réseau maillé ou un réseau maillé WiMax.

16. Système selon la revendication 14 ou 15,
dans lequel les noeuds sont des terminaux ou des stations de base mobiles.
